(19) **Europäisches Patentamt / European Patent Office / Office européen des brevets**

(11) **EP 4 753 179 A1**

(12) **EUROPEAN PATENT APPLICATION**
published in accordance with Art. 153(4) EPC

(43) Date of publication:
03.06.2026 Bulletin 2026/23

(21) Application number: 23953408.4

(22) Date of filing: 26.09.2023

(51) International Patent Classification (IPC):
$H04L\ 1/00^{(2006.01)}$     $H04W\ 72/044^{(2023.01)}$

(52) Cooperative Patent Classification (CPC):
H04L 1/00; H04W 72/044

(86) International application number:
PCT/CN2023/121588

(87) International publication number:
WO 2025/065248 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: HUAWEI TECHNOLOGIES CO., LTD.
Shenzhen 518129 (CN)

(72) Inventors:
• GAO, Kuandong
  Shenzhen, Guangdong 518129 (CN)
• HUANG, Huang
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **INFORMATION PROCESSING METHOD AND APPARATUS**

(57) Embodiments of this application provide an information processing method and apparatus. The method includes: interleaving modulation symbols of a plurality of terminal devices to determine interleaving information, where the modulation symbol is a modulation symbol of a downlink single carrier, and at least one piece of interleaving sub-information in the interleaving information includes a part of the modulation symbols of the plurality of terminal devices; and mapping the interleaving information to discrete Fourier transform DFT time domain resource units to obtain a mapping result, where modulation symbols of different terminal devices in the plurality of terminal devices are mapped to adjacent time domain resource units in the DFT time domain resource units. According to embodiments of this application, impact of signal noise can be reduced, and transmission efficiency can be improved.

S901

Interleave modulation symbols of a plurality of terminal devices to determine interleaving information

S902

Map the interleaving information to a discrete Fourier transform DFT time domain resource unit to obtain a mapping result

FIG. 9

## Description

## TECHNICAL FIELD

This application relates to the field of communication technologies, and in particular, to an information processing method and apparatus.

## BACKGROUND

Currently, a high frequency band (millimeter wave band, mainly including 28GHz, 39GHz, 60GHz, 73GHz, and the like) with rich frequency band resources has become a research and development hot topic in the industry to meet increasing communication requirements. In addition to a large bandwidth and a highly integrated antenna array to implement a high throughput, significant features of the high frequency band further include severe intermediate radio frequency distortion, such as phase noise (phase noise, PHN) and a center frequency offset (carrier frequency offset, CFO), and a Doppler shift in the high frequency band is also greater. The phase noise, the center frequency offset, and the greater Doppler shift each introduce a phase error, leading to performance degradation or even a working failure in a high-frequency communication system.

## SUMMARY

This application provides an information processing method and apparatus, to reduce impact of signal noise and improve transmission efficiency.

According to a first aspect, an embodiment of this application provides an information processing method. The method may be performed by a network device. Unless otherwise specified, in this application, the "network device" may refer to a network device itself, or may be a component (for example, a processor, a chip, or a chip system) in the network device, or may be a logical module or software that can implement all or a part of functions of the network device, or may be a logical module or software that can implement all or a part of functions of the network device. The method includes: interleaving modulation symbols of a plurality of terminal devices to determine interleaving information, where the modulation symbol is a modulation symbol of a downlink single carrier, and at least one piece of interleaving sub-information in the interleaving information includes a part of the modulation symbols of the plurality of terminal devices; and mapping the interleaving information to discrete Fourier transform DFT time domain resource units to obtain a mapping result, where modulation symbols of different terminal devices in the plurality of terminal devices are mapped to adjacent time domain resource units in the DFT time domain resource units.

In the foregoing method, the interleaving information is determined by interleaving the modulation symbols of the plurality of terminal devices, and the interleaving information is mapped to the DFT time domain resource units. In this way, the modulation symbols of the different terminal devices can be mapped to the adjacent time domain resource units in the DFT time domain resource units, or it may be understood that DFT time domain resource units to which modulation symbols of a same terminal device are mapped are spaced by a specific quantity of DFT time domain resource units, which can resist fluctuation of phase noise, reduce impact of signal noise, and improve transmission efficiency compared with a case in which the modulation symbols of the same terminal device are mapped to the adjacent time domain resource units in the DFT time domain resource units.

In a possible implementation, interleaving the modulation symbols of the plurality of terminal devices to determine the interleaving information includes: interleaving the modulation symbols of the plurality of terminal devices in one or more discrete Fourier transform DFT blocks in one or more orthogonal frequency division multiplexing OFDM symbols, to determine the interleaving information.

In another possible implementation, the downlink single carrier includes single carrier quadrature amplitude modulation SC-QAM or discrete Fourier transform-spread-orthogonal frequency division multiplexing DFT-s-OFDM.

In another possible implementation, the modulation symbol includes a modulation symbol of a physical downlink control channel PDCCH or a modulation symbol of a physical downlink shared channel PDSCH.

In another possible implementation, the interleaving includes placing the modulation symbols of the different terminal devices in the plurality of terminal devices at a spacing of L modulation symbols, where L is a positive integer greater than 0.

In another possible implementation, each of the at least one piece of interleaving sub-information includes $i*N$ modulation symbols, i is a quantity of modulation symbols sequentially or randomly selected from each of all groups at a time, all the groups include groups of the modulation symbols of all of the plurality of terminal devices, N indicates all the groups, i is a positive integer greater than 0, and N is a positive integer greater than 0.

In another possible implementation, the interleaving information includes k pieces of interleaving sub-information, $(k*i*N)$ is a quantity of modulation symbols of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes $j*M$ modulation symbols, j is a quantity of modulation symbols sequentially or randomly selected from each of a part of groups in the different terminal devices in the plurality of terminal devices at a time, the part of groups include a part of all groups, all the groups include groups of the modulation symbols of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of modulation symbols of the plurality of terminal devices, and k is a positive integer greater than 0.

In another possible implementation, M specified in a protocol, agreed on by the network device and the terminal device, configured by the network device, or reported by the terminal device.

In still another possible implementation, the method further includes: determining the quantity of modulation symbols of the plurality of terminal devices based on a size of the DFT time domain resource units.

In another possible implementation, each group includes a same quantity of modulation symbols, and each group is one of the groups of the modulation symbols of all of the plurality of terminal devices.

According to a second aspect, an embodiment of this application provides an information processing method. The method may be performed by a terminal device. Unless otherwise specified, in this application, the "terminal device" may refer to a terminal device itself, or may be a component (for example, a processor, a chip, or a chip system) in the terminal device, or may be a logical module or software that can implement all or a part of functions of the terminal device, or may be a logical module or software that can implement all or a part of functions of the terminal device. The method includes: obtaining to-be-decoded information, where the to-be-decoded information includes first information, the first information is information obtained by mapping interleaving information to DFT time domain resource units, modulation symbols of different terminal devices in a plurality of terminal devices are mapped to adjacent time domain resource units in the DFT time domain resource units, the interleaving information is determined by interleaving modulation symbols of the plurality of terminal devices, the modulation symbol is a modulation symbol of a downlink single carrier, and at least one piece of interleaving sub-information in the interleaving information includes a part of the modulation symbols of the plurality of terminal devices; and decoding the to-be-decoded information to obtain a decoding result.

In the foregoing method, in the foregoing manner, the modulation symbols of the different terminal devices may be obtained on adjacent time domain resource units in the DFT time domain resource units, that is, modulation symbols of a same terminal device may be obtained on DFT time domain resource units spaced by a specific quantity of DFT time domain resource units, so that fluctuation of phase noise can be resisted, impact of signal noise can be reduced, and transmission efficiency can be improved.

In a possible implementation, the interleaving includes selecting the modulation symbols of the different terminal devices in the plurality of terminal devices at a spacing of L modulation symbols, where L is a positive integer greater than 0.

In another possible implementation, each of the at least one piece of interleaving sub-information includes i*N modulation symbols, i is a quantity of modulation symbols sequentially or randomly selected from each of all groups at a time, all the groups include groups of the modulation symbols of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of modulation symbols of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M modulation symbols, j is a quantity of modulation symbols sequentially or randomly selected from each of a part of groups of the different terminal devices in the plurality of terminal devices at a time, the part of groups include a part of all groups, all the groups include groups of the modulation symbols of all of the plurality of terminal devices, M is the part of groups, j is a positive integer greater than 0, and M is a positive integer greater than 0.

In another possible implementation, the interleaving information includes k pieces of interleaving sub-information, (k*j*M) is a quantity of modulation symbols of the plurality of terminal devices, and k is a positive integer greater than 0.

In another possible implementation, M specified in a protocol, agreed on by the network device and the terminal device, configured by the network device, or reported by the terminal device.

In another possible implementation, each group includes a same quantity of modulation symbols, and each group is one of the groups of the modulation symbols of all of the plurality of terminal devices.

According to a third aspect, an embodiment of this application provides an information processing method. The method may be performed by a network device. Unless otherwise specified, in this application, the "network device" may refer to a network device itself, or may be a component (for example, a processor, a chip, or a chip system) in the network device, or may be a logical module or software that can implement all or a part of functions of the network device, or may be a logical module or software that can implement all or a part of functions of the network device. The method includes:

interleaving bit information of a plurality of terminal devices to determine interleaving information, where the bit information is information obtained through control channel coding, and at least one piece of interleaving sub-information in the interleaving information includes a part of the bit information of the plurality of terminal devices; and modulating the interleaving information to obtain a modulation result, where a modulation symbol in the modulation result is obtained by modulating bit information of different terminal devices in the plurality of terminal devices.

In the foregoing method, the interleaving information is determined by interleaving the bit information of the plurality of terminal devices, and the interleaving information is modulated to obtain the modulation result. In this way, a modulation symbol in the modulation result may be obtained by modulating the bit information of the different terminal devices in the plurality of terminal devices, which can resist phase noise fluctuation, reduce impact of signal noise, and improve transmission efficiency compared with a case in which one modulation symbol is obtained by modulating bit information of a same terminal device.

In a possible implementation, interleaving the bit information of the plurality of terminal devices to determine the interleaving information includes: interleaving the bit information of the plurality of terminal devices in one or more discrete Fourier transform DFT blocks in one or more orthogonal frequency division multiplexing OFDM symbols, to determine the interleaving information.

In another possible implementation, the interleaving includes placing the bit information of the different terminal devices in the plurality of terminal devices at a spacing of L pieces of bit information, where L is a positive integer greater than 0.

In another possible implementation, each of the at least one piece of interleaving sub-information includes i*N pieces of bit information, i is a quantity of bit information sequentially or randomly selected from each of all groups at a time, all the groups include groups of the bit information of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of bit information of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of bit information of the plurality of terminal devices, and k is a positive integer greater than 0.

In another possible implementation, M specified in a protocol, agreed on by the network device and the terminal device, configured by the network device, or reported by the terminal device.

In another possible implementation, each group includes a same quantity of bit information, and each group is one of the groups of the bit information of all of the plurality of terminal devices.

According to a fourth aspect, an embodiment of this application provides an information processing method. The method may be performed by a terminal device. Unless otherwise specified, in this application, the "terminal device" may refer to a terminal device itself, or may be a component (for example, a processor, a chip, or a chip system) in the terminal device, or may be a logical module or software that can implement all or a part of functions of the terminal device, or may be a logical module or software that can implement all or a part of functions of the terminal device. The method includes: obtaining to-be-decoded information, where the to-be-decoded information includes first information, the first information is information obtained by modulating interleaving information, a modulation symbol in the first information is obtained by modulating bit information of different terminal devices in the plurality of terminal devices, the interleaving information is determined by interleaving bit information of the plurality of terminal devices, the bit information is information obtained through control channel coding, and at least one piece of interleaving sub-information in the interleaving information includes a part of the bit information of the plurality of terminal devices; and decoding the to-be-decoded information to obtain a decoding result.

In the foregoing method, in the foregoing manner, a modulation symbol in the modulation result may be obtained by modulating the bit information of the different terminal devices in the plurality of terminal devices, which can resist phase noise fluctuation, reduce impact of signal noise, and improve transmission efficiency compared with a case in which one modulation symbol is obtained by modulating bit information of a same terminal device.

In a possible implementation, the interleaving includes selecting bit information of the different terminal devices in the plurality of terminal devices at a spacing of L pieces of bit information, where L is a positive integer greater than 0.

In another possible implementation, each of the at least one piece of interleaving sub-information includes i*N pieces of bit information, i is a quantity of bit information sequentially or randomly selected from each of all groups at a time, all the groups include groups of the bit information of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of bit information of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of bit information of the plurality of terminal devices, and k is a positive integer greater than 0.

In another possible implementation, M specified in a protocol, agreed on by the network device and the terminal device, configured by the network device, or reported by the terminal device.

In another possible implementation, each group includes a same quantity of bit information, and each group is one of the groups of the bit information of all of the plurality of terminal devices.

According to a fifth aspect, an embodiment of this application provides an information processing apparatus. The information processing apparatus is a network device or a chip in a network device. In this application, the "network device" may refer to a network device itself, or may be a component (for example, a processor, a chip, or a chip system) in the network device, or may be a logical module or software that can implement all or a part of functions of the network device, or may be a logical module or software that can implement all or a part of functions of the network device. The apparatus includes a processing unit and a transceiver unit. The processing unit is configured to interleave modulation symbols of a plurality of terminal devices to determine interleaving information, where the modulation symbol is a modulation symbol of a downlink single carrier, and at least one piece of interleaving sub-information in the interleaving information includes a part of the modulation symbols of the plurality of terminal devices. The processing unit is configured to map the interleaving information to discrete Fourier transform DFT time domain resource units to obtain a mapping result, where modulation symbols of different terminal devices in the plurality of terminal devices are mapped to adjacent time domain resource units in the DFT time domain resource units.

In a possible implementation, the processing unit is configured to interleave the modulation symbols of the plurality of terminal devices in one or more discrete Fourier transform DFT blocks in one or more orthogonal frequency division multiplexing OFDM symbols, to determine the interleaving information.

In another possible implementation, the downlink single carrier includes single carrier quadrature amplitude modulation SC-QAM or discrete Fourier transform-spread-orthogonal frequency division multiplexing DFT-s-OFDM.

In another possible implementation, the modulation symbol includes a modulation symbol of a physical downlink control channel PDCCH or a modulation symbol of a physical downlink shared channel PDSCH.

In another possible implementation, the interleaving includes placing the modulation symbols of the different terminal devices in the plurality of terminal devices at a spacing of L modulation symbols, where L is a positive integer greater than 0.

In another possible implementation, each of the at least one piece of interleaving sub-information includes i*N modulation symbols, i is a quantity of modulation symbols sequentially or randomly selected from each of all groups at a time, all the groups include groups of the modulation symbols of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of modulation symbols of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M modulation symbols, j is a quantity of modulation symbols sequentially or randomly selected from each of a part of groups of the different terminal devices in the plurality of terminal devices at a time, the part of groups include a part of all groups, all the groups include groups of the modulation symbols of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of modulation symbols of the plurality of terminal devices, and k is a positive integer greater than 0.

In another possible implementation, M specified in a protocol, agreed on by the network device and the terminal device, configured by the network device, or reported by the terminal device.

In another possible implementation, the processing unit is further configured to determine a quantity of modulation symbols of the plurality of terminal devices based on a size of the DFT time domain resource units.

In another possible implementation, each group includes a same quantity of modulation symbols, and each group is one of the groups of the modulation symbols of all of the plurality of terminal devices.

For technical effects brought by the fifth aspect or the possible implementations, refer to the descriptions of the technical effects brought by the first aspect or the corresponding implementations.

According to a sixth aspect, an embodiment of this application provides an information processing apparatus. The information processing apparatus is a terminal device or a chip in a terminal device. In this application, the "terminal device" may refer to a terminal device itself, or may be a component (for example, a processor, a chip, or a chip system) in the terminal device, or may be a logical module or software that can implement all or a part of functions of the terminal device, or may be a logical module or software that can implement all or a part of functions of the terminal device. The apparatus includes a processing unit and a transceiver unit. The processing unit is configured to obtain to-be-decoded information, where the to-be-decoded information includes first information, the first information is information obtained by mapping interleaving information to DFT time domain resource units, modulation symbols of different terminal devices in a plurality of terminal devices are mapped to adjacent time domain resource units in the DFT time domain resource units, the interleaving information is determined by interleaving modulation symbols of the plurality of terminal devices, the modulation symbol is a modulation symbol of a downlink single carrier, and at least one piece of interleaving sub-information in the interleaving information includes a part of the modulation symbols of the plurality of terminal devices. The processing unit is configured to decode the to-be-decoded information to obtain a decoding result.

In a possible implementation, the interleaving includes selecting the modulation symbols of the different terminal devices in the plurality of terminal devices at a spacing of L modulation symbols, where L is a positive integer greater than 0.

In another possible implementation, each of the at least one piece of interleaving sub-information includes i*N modulation symbols, i is a quantity of modulation symbols sequentially or randomly selected from each of all groups at a time, all the groups include groups of the modulation symbols of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of modulation symbols of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M modulation symbols, j is a quantity of modulation symbols sequentially or randomly selected from each of a part of groups of the different terminal devices in the plurality of terminal devices at a time, the part of groups include a part of all groups, all the groups include groups of the modulation symbols of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of modulation symbols of the plurality of terminal devices, and k is a positive integer greater than 0.

In another possible implementation, M specified in a protocol, agreed on by the network device and the terminal device, configured by the network device, or reported by the terminal device.

In another possible implementation, each group includes a same quantity of modulation symbols, and each group is one of the groups of the modulation symbols of all of the plurality of terminal devices.

For technical effects brought by the sixth aspect or the possible implementations, refer to the descriptions of the technical effects of the second aspect or the corresponding implementations.

According to a seventh aspect, an embodiment of this application provides an information processing apparatus. The information processing apparatus is a network device or a chip in a network device. In this application, the "network device" may refer to a network device itself, or may be a component (for example, a processor, a chip, or a chip system) in the network device, or may be a logical module or software that can implement all or a part of functions of the network device, or may be a logical module or software that can implement all or a part of functions of the network device. The apparatus includes a processing unit and a transceiver unit. The processing unit is configured to interleave bit information of a plurality of terminal devices to determine interleaving information, where the bit information is information obtained through control channel coding, and at least one piece of interleaving sub-information in the interleaving information includes a part of the bit information of the plurality of terminal devices. The processing unit is configured to modulate the interleaving information to obtain a modulation result, where a modulation symbol in the modulation result is obtained by modulating bit information of different terminal devices in the plurality of terminal devices.

In a possible implementation, the processing unit is configured to interleave the bit information of the plurality of terminal devices in one or more discrete Fourier transform DFT blocks in one or more orthogonal frequency division multiplexing OFDM symbols, to determine the interleaving information.

In another possible implementation, the interleaving includes placing the bit information of the different terminal devices in the plurality of terminal devices at a spacing of L pieces of bit information, where L is a positive integer greater than 0.

In another possible implementation, each of the at least one piece of interleaving sub-information includes i*N pieces of bit information, i is a quantity of bit information sequentially or randomly selected from each of all groups at a time, all the groups include groups of the bit information of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of bit information of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of bit information of the plurality of terminal devices, and k is a positive integer greater than 0.

In another possible implementation, M specified in a protocol, agreed on by the network device and the terminal device, configured by the network device, or reported by the terminal device.

In another possible implementation, each group includes a same quantity of bit information, and each group is one of the groups of the bit information of all of the plurality of terminal devices.

For technical effects brought by the seventh aspect or the possible implementations, refer to the descriptions of the technical effects brought by the third aspect or the corresponding implementations.

According to an eighth aspect, an embodiment of this application provides an information processing apparatus. The information processing apparatus is a terminal device or a chip in a terminal device. In this application, the "terminal device" may refer to a terminal device itself, or may be a component (for example, a processor, a chip, or a chip system) in the terminal device, or may be a logical module or software that can implement all or a part of functions of the terminal device, or may be a logical module or software that can implement all or a part of functions of the terminal device. The apparatus includes a processing unit and a transceiver unit. The processing unit is configured to obtain to-be-decoded information, where the to-be-decoded information includes first information, the first information is information obtained by modulating interleaving information, a modulation symbol in the first information is obtained by modulating bit information of different terminal devices in the plurality of terminal devices, the interleaving information is determined by interleaving bit information of the plurality of terminal devices, the bit information is information obtained through control channel coding, and at least one piece of interleaving sub-information in the interleaving information includes a part of the bit information of the plurality of terminal devices. The processing unit is configured to decode the to-be-decoded information to obtain a decoding result.

In a possible implementation, the interleaving includes selecting the bit information of the different terminal devices in the plurality of terminal devices at a spacing of L pieces of bit information, where L is a positive integer greater than 0.

In another possible implementation, each of the at least one piece of interleaving sub-information includes i*N pieces of bit information, i is a quantity of bit information sequentially or randomly selected from each of all groups at a time, all the groups include groups of the bit information of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of bit information of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of bit information of the plurality of terminal devices, and k is a positive integer greater than 0.

In another possible implementation, M specified in a protocol, agreed on by the network device and the terminal device, configured by the network device, or reported by the terminal device.

In another possible implementation, each group includes a same quantity of bit information, and each group is one of the groups of the bit information of all of the plurality of terminal devices.

For technical effects brought by the eighth aspect or the possible implementations, refer to the descriptions of the technical effects brought by the fourth aspect or the corresponding implementations.

According to a ninth aspect, an embodiment of this application provides an information processing apparatus. The information processing apparatus includes at least one processor and a communication interface. The communication interface is configured to receive and/or send data, and/or the communication interface is further configured to provide input and/or output for the at least one processor. The at least one processor is configured to invoke a computer program or instructions stored in a memory, to implement the method according to the first aspect or the possible implementations of the first aspect.

According to a tenth aspect, an embodiment of this application provides an information processing apparatus. The information processing apparatus includes at least one processor and a communication interface. The communication interface is configured to receive and/or send data, and/or the communication interface is configured to provide input and/or output for the at least one processor. The at least one processor is configured to invoke a computer program or instructions stored in a memory, to implement the method according to the second aspect or the possible implementations of the second aspect.

According to an eleventh aspect, an embodiment of this application provides an information processing apparatus. The information processing apparatus includes at least one processor and a communication interface. The communication interface is configured to receive and/or send data, and/or the communication interface is configured to provide input and/or output for the at least one processor. The at least one processor is configured to invoke a computer program or instructions stored in a memory, to implement the method according to the third aspect or the possible implementations of the third aspect.

According to a twelfth aspect, an embodiment of this application provides an information processing apparatus. The information processing apparatus includes at least one processor and a communication interface. The communication interface is configured to receive and/or send data, and/or the communication interface is further configured to provide input and/or output for the at least one processor. The at least one processor is configured to invoke a computer program or instructions stored in a memory, to implement the method according to the fourth aspect or the possible implementations of the fourth aspect.

According to a thirteenth aspect, an embodiment of this application provides a computer-readable storage medium. The computer-readable storage medium stores a computer program or instructions, and when the computer program or the instructions are run on a processor, the method according to any one of the foregoing aspects or the possible implementations of the foregoing aspects is implemented.

According to a fourteenth aspect, an embodiment of this application provides a computer program product. The computer program product includes a computer program or instructions, and when the computer program or the instructions are run on a computer, the method according to any one of the foregoing aspects or the possible implementations of the foregoing aspects is implemented.

According to a fifteenth aspect, an embodiment of this application provides a communication system. The system includes the apparatus according to the fifth aspect and the apparatus according to the sixth aspect, or the apparatus according to the seventh aspect and the apparatus according to the eighth aspect.

In the foregoing methods, the interleaving information is determined by interleaving the modulation symbols of the plurality of terminal devices, and the interleaving information is mapped to the DFT time domain resource units. In this way, the modulation symbols of the different terminal devices can be mapped to the adjacent time domain resource units in the DFT time domain resource units, or it may be understood that DFT time domain resource units to which modulation symbols of a same terminal device are mapped are spaced by a specific quantity of DFT time domain resource units, which can resist fluctuation of phase noise, reduce impact of signal noise, and improve transmission efficiency compared with a case in which the modulation symbols of the same terminal device are mapped to the adjacent time domain resource units in the DFT time domain resource units.

## BRIEF DESCRIPTION OF DRAWINGS

FIG. 1 is a diagram of an architecture of a communication system according to an embodiment of this application;

FIG. 2 is a diagram of a peak to average ratio according to an embodiment of this application;

FIG. 3 is a diagram of a multi-carrier signal according to an embodiment of this application;

FIG. 4 is a diagram of a DFT-s-OFDM processing procedure according to an embodiment of this application;

FIG. 5 is a diagram of phase noise according to an embodiment of this application;

FIG. 6A and FIG. 6B are diagrams of phase noise compensation/uncompensation according to an embodiment of this application;

FIG. 7 is a diagram of different REG bundles according to an embodiment of this application;

FIG. 8 is a diagram of mapping between a CCE and an REG according to an embodiment of this application;

FIG. 9 is a flowchart of an information processing method according to an embodiment of this application;

FIG. 10 is a diagram of an interleaving process according to an embodiment of this application;

FIG. 11 is a diagram of another interleaving process according to an embodiment of this application;

FIG. 12 is a diagram of another interleaving process according to an embodiment of this application;

FIG. 13 is a diagram of another interleaving process according to an embodiment of this application;

FIG. 14 is a flowchart of another information processing method according to an embodiment of this application;

FIG. 15 is a diagram of a structure of an information processing apparatus according to an embodiment of this application; and

FIG. 16 is a diagram of a structure of another information processing apparatus according to an embodiment of this application.

**DESCRIPTION OF EMBODIMENTS**

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, a, b, and c each may be singular or plural.

It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It may be understood that "sending" and "receiving" in this application indicate a signal transmission direction. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on information between a source end at which the information is sent and a destination end, but the destination end can understand valid information from the source end. Similar descriptions in this application may be understood similarly, and details are not described again.

A communication method provided in embodiments of this application may be applied to a cellular communication system related to a 3rd generation partnership project (3rd generation partnership project, 3GPP), for example, a 4th generation (4th generation, 4G) communication system, for example, a long-term evolution (long-term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a Bluetooth system, a wireless fidelity (wireless fidelity, Wi-Fi) system, a LoRa system or a vehicle to everything system, a communication system that supports integration of a plurality of wireless technologies, and a device-to-device (device-to-device, D2D) system. The method provided in embodiments of this application may be further applied to a satellite communication system. The satellite communication system may be integrated with the foregoing communication system. The wireless communication system in this application further includes but is not limited to a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division-synchronization code division multiple access, TD-SCDMA) system.

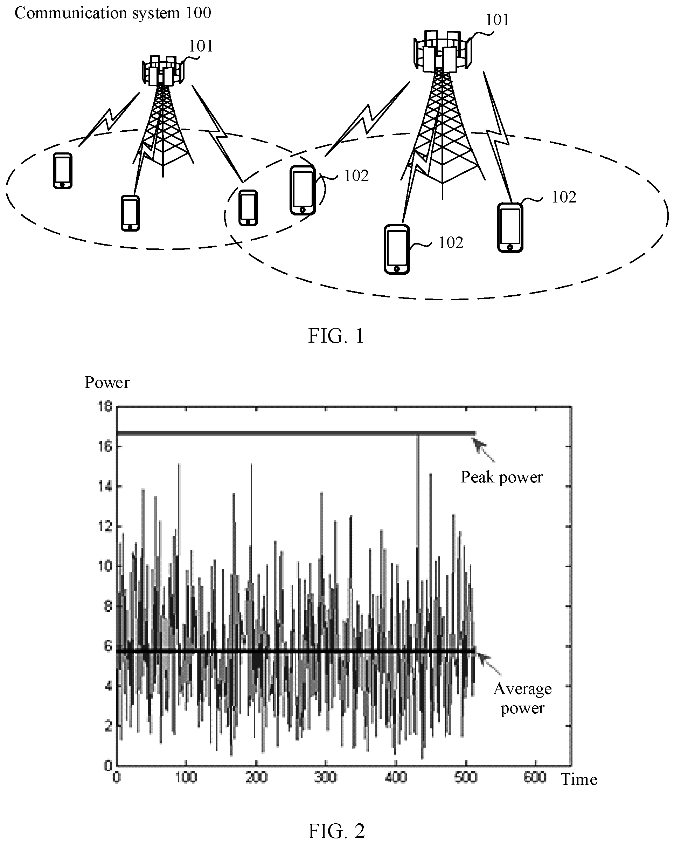

FIG. 1 is a diagram of an architecture of a communication system according to an embodiment of this application. The architecture of the communication system shown in FIG. 1 is used as an example to describe an application scenario used in this application. The communication system 100 includes a network device 101 and a terminal device 102. The apparatus provided in embodiments of this application may be used in the network device 101 or the terminal device 102. It may be understood that FIG. 1 shows only one possible communication system architecture to which embodiments of this application may be applied. In another possible scenario, the communication system architecture may alternatively include another device.

The terminal device 102 is also referred to as user equipment (user equipment, UE), a mobile station (mobile station, MS), a mobile terminal (mobile terminal, MT), or the like, is a device that provides voice or data connectivity for a user, and specifically includes a device that provides voice for a user, or includes a device that provides data connectivity for a user, or include a device that provides voice and data connectivity for a user. For example, the terminal apparatus may include a handheld device with a wireless connection function or a processing device connected to a wireless modem. The terminal device may communicate with a core network through a radio access network (radio access network, RAN), and exchange a voice or data with the RAN, or interact a voice and data with the RAN. Currently, the terminal device may be a mobile phone, a tablet computer, a laptop computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed rail), a virtual reality (virtual reality, VR) device, an augmented reality (augmented reality, AR) device, a wireless terminal in industrial control, a smart household device (for example, a refrigerator, a television, an air conditioner, or a meter), an intelligent robot, workshop equipment, a wireless terminal in self driving, a wireless terminal in remote surgery, a wireless terminal in a smart grid (smart grid), a wireless terminal in transportation safety, a wireless terminal in a smart city, a wireless terminal in a smart home, a flight device (for example, an intelligent robot, a hot air balloon, a drone, or an airplane). Alternatively, the terminal device may be another device that has a terminal function. For example, the terminal device may alternatively be a device that functions as a terminal in D2D communication. The terminal device may further include a vehicle-to-everything (vehicle-to-everything, V2X) terminal device, a machine-to-machine/machine type communications (machine-to-machine/machine type communications, M2M/MTC) terminal device, an internet of things (internet of things, IoT) terminal device, light user equipment (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), an uncrewed aerial vehicle device, or the like. For example, the terminal device may include a mobile phone (or referred to as a "cellular" phone), a computer with a mobile terminal device, or a portable, pocket-sized, handheld, or computer built-in mobile apparatus, for example, a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. A terminal device having a wireless transceiver function and a chip that may be disposed in the terminal device are collectively referred to as the terminal device in this application.

It should be noted that the terminal device may be a device or an apparatus with a chip, a device or an apparatus integrated with a circuit, or a chip, a module, or a control unit in the device or the apparatus shown above. This is not specifically limited in this application.

The network device 101 is a device that is deployed in a radio access network and that provides a wireless communication function for the terminal device. The network device 101 may also be referred to as an access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a 4th generation (fourth-generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a wireless controller in a CRAN scenario, a wireless backhaul node, a transmission point (transmission point, TP), or a transmission and receiving point (transmission and receiving point, TRP). The network device may alternatively be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the network device may be a server, a wearable device, a vehicle, an in-vehicle device, or the like. For example, the network device may be a road side unit (road side unit, RSU) in a V2X technology.

It should be noted that in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

In some deployments, the CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

Optionally, the network device may alternatively be a core network device. The core network device is responsible for access control, registration management, service management, mobility management, and the like for the terminal device to access a network. For example, the core network device is the AMF.

It should be noted that the network device may be the device or the apparatus shown above, or may be a component (for example, a chip), a module, or a unit in the device or the apparatus shown above. This is not specifically limited in this application.

With reference to the communication system shown in FIG. 1, the following describes in detail an information processing method provided in embodiments of this application.

To better understand solutions provided in embodiments of this application, the following first describes some terms, concepts, or procedures in embodiments of this application.

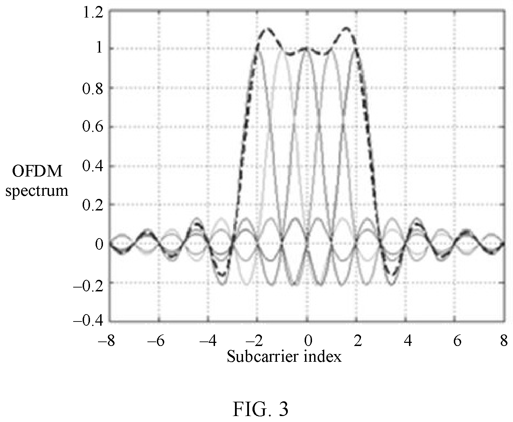

A peak to average power ratio (peak to average power ratio, PAPR): A radio signal, observed in time domain, is a sine wave with a constantly changing amplitude, and the amplitude is not constant. An amplitude peak of the signal in a periodicity is different from an amplitude peak in another periodicity. Therefore, average power and peak power in all periodicities are different. Within a long period of time, peak power is maximum transient power that occurs with a probability, and the probability is usually 1% (namely, 10^ - 2). At this probability, a ratio of the peak power to total average power of a system is a peak to average ratio. FIG. 2 is a diagram of the peak to average ratio according to an embodiment of this application. Two factors affecting the peak to average ratio of the system include a peak to average ratio of a baseband signal and a peak to average ratio brought by multi-carrier power superposition. FIG. 3 is a diagram of a multi-carrier signal according to an embodiment of this application. It can be seen from FIG. 3 that, in an orthogonal frequency division multiplexing (orthogonal frequency division multiplexing, OFDM) technology system, a signal on a carrier is represented as a sinc function, and there are tails on the left and right sides. Tails of a plurality of carriers may be superposed at a remote location at a specific probability to form a point with high peak power. In other words, an OFDM signal is formed by adding a plurality of independent modulated subcarrier signals. Such a composite signal is likely to generate high peak power, and therefore generate a large peak ratio.

If a signal of a wireless communication system needs to be transmitted more far, power amplification needs to be performed. However, due to technical and cost limitations, a power amplifier usually amplifies a signal linearly within a range. If the range is exceeded, signal distortion occurs (similar to a microphone used for singing, the microphone can normally amplify human voice when a user speaks, but the voice becomes strange and difficult to hear when the user yells). Accordingly, signal distortion causes a receiver to fail to correctly parse the signal. To ensure that a signal peak is still within the linear range of the power amplifier, average power needs to be reduced. This leads to low efficiency of the power amplifier, or is equivalent to a smaller coverage area. To meet a coverage requirement, a signal generation technology with a low PAPR usually needs to be selected.

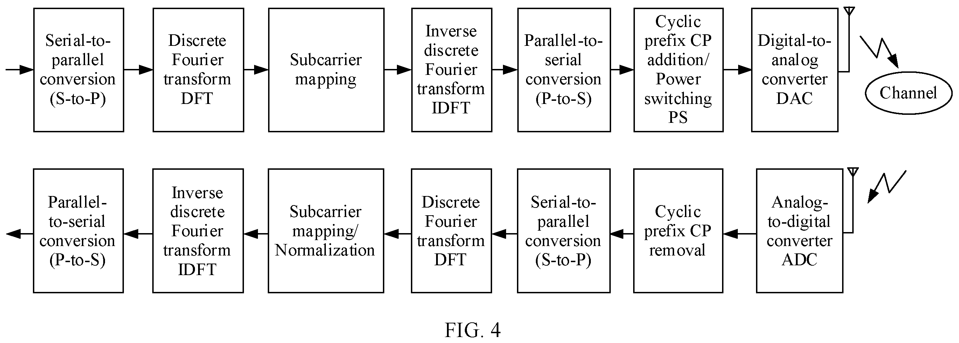

A discrete Fourier transform-spread-orthogonal frequency division multiplexing technology (discrete Fourier transform-spread-orthogonal frequency division multiplexing, DFT-s-OFDM) technology is a variant of a cyclic prefix-orthogonal frequency division multiplexing (cyclic prefix-orthogonal frequency division multiplexing, CP-OFDM) technology. In CP-OFDM, a modulation symbol obtained through modulation is mapped to a frequency domain subcarrier, and then inverse Fourier transform is performed on the modulation symbol, to transform a frequency domain signal into a time domain signal, and a cyclic prefix is added, to obtain a to-be-sent signal. In DFT-s-OFDM, after discrete Fourier transform is performed on a specific quantity of modulation symbols to transform the modulation symbols into frequency domain, frequency domain signals are filtered to be mapped or are not filtered to be directly mapped to frequency domain subcarriers, then inverse discrete Fourier transform is performed on the frequency domain signals, to transform the frequency domain signals into time domain signals, and cyclic prefixes are added, to obtain to-be-sent signals. FIG. 4 is a diagram of a DFT-s-OFDM processing procedure according to an embodiment of this application. It can be seen from FIG. 4 that, a sending procedure is as follows: N-point modulation data generated through encoding is converted into N-point parallel modulation data after serial-to-parallel conversion (S-to-P) is performed. The N-point parallel modulation data is transformed into frequency domain data through discrete Fourier transform (discrete Fourier transform, DFT), and the frequency domain data is mapped to an M-point frequency domain subcarrier (subcarrier mapping). M-point inverse discrete Fourier transform (inverse discrete Fourier transform, IDFT) is performed to transform the frequency domain data into time domain, and parallel-to-serial conversion (P-to-S) is performed. Then, a cyclic prefix (cyclic prefix, CP) is added or power switching (power switching, PS) is performed. Finally, signals are converted by a digital-to-analog converter (digital-to-Analog converter, DAC) and a radio frequency module, and then sent through an antenna. A receiving procedure is as follows: Sending signals are received by a receive antenna after passing through a radio channel. After the signals received by the receive antenna pass through a radio frequency module and an analog-to-digital converter, CPs are removed, and then serial-to-parallel conversion is performed. DFT is performed to transform the signals into frequency domain. Then, N signals are extracted, in other words, demapping is performed. After extraction, the signals are equalized on an estimated channel, and IDFT is performed to transform the signals into modulation signals. Finally, parallel-to-serial conversion is performed. Because DFT-s-OFDM has extra DFT processing before a conventional OFDM processing process, DFT-s-OFDM is also referred to as a linear precoding OFDM technology. DFT-s-OFDM is essentially of a single carrier. In physical essence, a DFT-mapping-IFFT operation is actually equivalent to convolution performed on an input signal before DFT and a sinc waveform. Because DFT-s-OFDM is essentially of the single carrier, compared with a conventional OFDM processing process, DFT-s-OFDM has a lower PAPR, so that power transmit efficiency of a mobile terminal can be improved, and battery service life can be prolonged, thereby reducing terminal costs.

A high frequency band (millimeter wave band, for example, may include 28GHz, 39GHz, 60GHz, 73GHz, and the like) with rich frequency band resources has become a research and development hot topic in the industry to meet increasing communication requirements. In addition to a large bandwidth and a highly integrated antenna array to implement a high throughput, significant features of the high frequency band further include severe intermediate radio frequency distortion, such as phase noise (phase noise, PHN) and a center frequency offset (carrier frequency offset, CFO), and a Doppler shift in the high frequency band is also greater. The phase noise, the center frequency offset, and the greater Doppler shift each introduce a phase error, leading to performance degradation or even a working failure in a high-frequency communication system.

The phase noise is used as an example. As the frequency band increases, power spectral density of the phase noise is higher, and therefore impact on a received signal is greater. Impact of the phase noise may be expressed as follows:

$$y(n) = x(n)e^{j\theta_n}$$

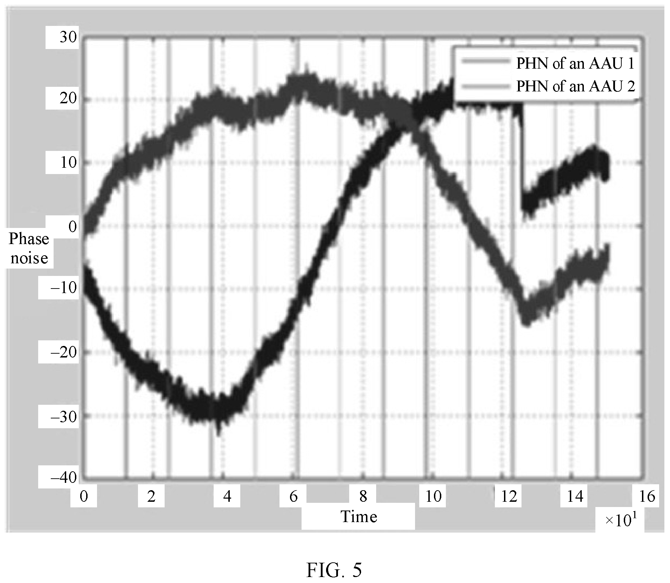

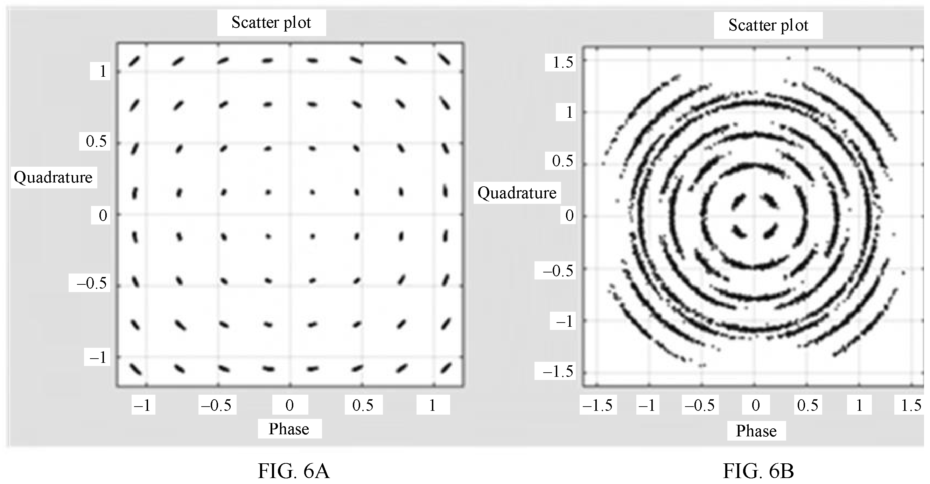

Herein, n=0, 1, ..., and N-1 is a time domain sampling point, j represents an identifier of a virtual signal, $\theta$ represents a phase error, x(n) represents a sending signal, and y(n) represents a receiving signal. In brief, a random phase value is generated at each sampling point n. FIG. 5 is a diagram of phase noise according to an embodiment of this application. It can be seen from FIG. 5 that random phases of phase noise of a device 1 (AAU 1) and phase noise of a device 2 (AAU 2) that change with time are within [-30, 20] degrees. It can be seen from FIG. 5 that, when a frequency band is high, deterioration of phase noise causes deterioration of demodulation performance. Therefore, in an existing NR protocol, phase tracking reference signals (phase tracking reference signals, PTRSs) are introduced for two waveforms (CP-OFDM and DFT-s-OFDM), to compensate for impact of phase noise and improve demodulation performance in a phase noise condition. Refer to FIG. 6A and FIG. 6B. FIG. 6A is a diagram of phase noise compensation according to an embodiment of this application. FIG. 6B is a diagram of phase noise uncompensation according to an embodiment of this application. Important non-ideal impact accompanying high-frequency transmission is phase noise. In time domain, phase noise is represented as a phase offset applied to a standard constellation point.

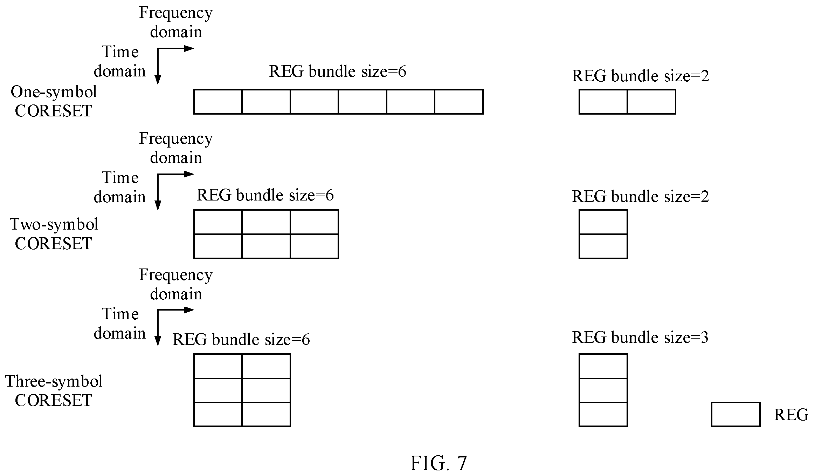

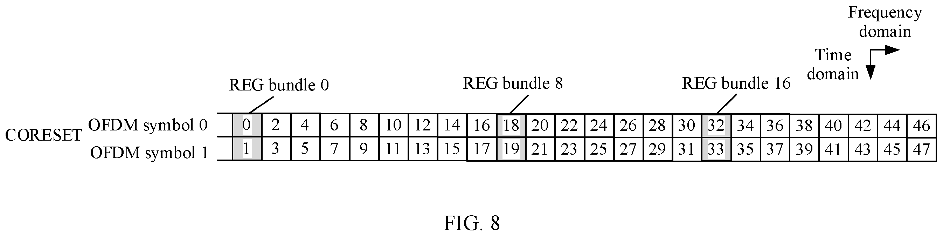

Different control channel elements (control channel element, CCE) of a physical downlink control channel (physical downlink control channel, PDCCH) in NR are interleaved. In frequency domain resource allocation in NR, each subcarrier is referred to as a resource element (resource element, RE), 12 consecutive REs form a physical resource block (physical resource block, PRB), and each PRB may also be referred to as a resource element group (resource element group, REG). Six REGs form one CCE. Different quantities of CCEs form a PDCCH. CCEs included in one PDCCH are referred to as an aggregation level of the PDCCH. If the aggregation level is any one of 1, 2, 4, 8, and 16, the quantity of CCEs is any one of 1, 2, 4, 8, and 16. FIG. 7 is a diagram of different REG bundles according to an embodiment of this application. Different REGs form a bundle, each REG bundle includes 2, 3, or 6 REGs, and mapping from a CCE to an REG may be interleaved mapping or non-interleaved mapping. Mapping from a CCE to an REG means that the REGs forming the CCE are selected based on different REG bundles. For example, FIG. 8 is a diagram of mapping between a CCE and an REG according to an embodiment of this application. When an REG bundle size is equal to 2, REG bundles whose REG bundle indexes are 0, 8, and 16 may be selected as REG bundles forming the CCE. Such an REG bundle selection is also referred to as interleaved mapping between a CCE and an REG. If mapping is non-interleaved mapping, when an REG bundle size is equal to 2, REG bundles whose REG bundle indexes are 0, 1, and 2 may be selected as REG bundles forming the CCE.

In conclusion, it can be learned that a severe intermediate radio frequency distortion problem like phase noise is included during high-frequency transmission, and consequently, a phase error is introduced, causing performance deterioration or even a working failure of a high-frequency communication system. Therefore, how to resist phase noise and improve transmission performance of the high-frequency communication system is a technical problem that is being resolved by a person skilled in the art.

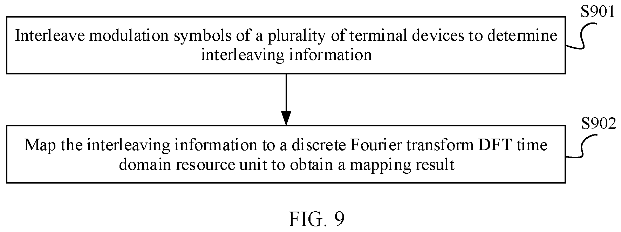

FIG. 9 is an information processing method according to an embodiment of this application. The method includes but is not limited to the following steps.

Step S901: Interleave modulation symbols of a plurality of terminal devices to determine interleaving information.

Optionally, a network device may interleave the modulation symbols of the plurality of terminal devices to determine the interleaving information. Optionally, the network device may interleave the modulation symbols of the plurality of terminal devices in one or more DFT blocks in one or more orthogonal frequency division multiplexing (orthogonal frequency division multiplexing, OFDM) symbols. That is, it may be understood that the network device interleaves the modulation symbols of the plurality of terminal devices in time domain. The modulation symbol is a modulation symbol of a downlink single carrier. The downlink single carrier may include single-carrier quadrature amplitude modulation (single-carrier quadrature amplitude modulation, SC-QAM) or DFT-s-OFDM. The modulation symbol includes a modulation symbol of a PDCCH or a modulation symbol of a physical downlink shared channel (physical downlink shared channel, PDSCH). Optionally, the modulation symbol may be a modulation symbol of data, or may be a modulation symbol of a reference signal, for example, may be a modulation symbol of a demodulation reference signal (demodulation reference signal, DMRS). Optionally, the modulation symbols of the plurality of terminal devices may mean that different terminal devices in the plurality of terminal devices correspond to different modulation symbols. In an example, a terminal device 1 has 36 modulation symbols, and a terminal device 2 has 54 modulation symbols.

Optionally, at least one piece of interleaving sub-information in the interleaving information includes a part of the modulation symbols of the plurality of terminal devices. Optionally, at least one piece of interleaving sub-information includes a part of the modulation symbols of the different terminal devices in the plurality of terminal devices. Optionally, the interleaving information may include at least one piece of interleaving sub-information. When the interleaving information includes one piece of interleaving sub-information, the interleaving information, namely, the interleaving sub-information, includes all the modulation symbols of the plurality of terminal devices. Correspondingly, in this case, it may be understood that an action of dividing into interleaving sub-information may not necessarily exist, and the interleaving information may be directly mapped to DFT time domain resource units. This is not limited in embodiments of this application. When the interleaving information includes a plurality of pieces of interleaving sub-information, each piece of interleaving sub-information includes a part of the modulation symbols of the plurality of terminal devices, and the interleaving information includes all the modulation symbols of the plurality of terminal devices. Optionally, the interleaving sub-information may also be referred to as an interleaving block. This is not limited in embodiments of this application.

The following describes a case in which all groups of the modulation symbols of the plurality of terminal devices are interleaved, which may also be referred to as interleaving of all modulation symbol groups, and is specifically as follows.

Each of the at least one piece of interleaving sub-information includes i*N modulation symbols, i is a quantity of modulation symbols sequentially or randomly selected from each of all the groups at a time, all the groups include groups of the modulation symbols of all of the plurality of terminal devices, N indicates all the groups, and i is a positive integer greater than 0. For example, i may be any one or more of 1, 2, 3, 4, 5, 6, 8, 10, and 12. Optionally, when a value of i is greater than 2, this interleaving manner may be referred to as block interleaving. N is a positive integer greater than 0. N may be understood as a sum of quantities of groups of the modulation symbols of the different terminal devices, and a quantity of groups of modulation symbols corresponding to each terminal device may be at least one. Optionally, i and a quantity of modulation symbols included in each of all the groups may be agreed on by the terminal device and the network device, specified in a protocol, configured by the network device, or reported by the terminal device. This is not limited in embodiments of this application. If i and the quantity of modulation symbols included in each of all the groups is configured by the network device, configuration may be performed by using any one or more of signaling such as RRC signaling, physical layer downlink control information (downlink control information, DCI), a MAC control element (control element, CE), system information, broadcast signal signaling, or a paging message. Optionally, each of all the groups may include a same or different quantity of modulation symbols. When two of all the groups include different quantities of modulation symbols, for example, a last location of a group that includes a smaller quantity of modulation symbols in the two groups cannot be filled, the group that includes the smaller quantity of modulation symbols in the two groups may be filled with 0, left empty, or reserved as a placeholder.

This is not limited in embodiments of this application. For example, a group 1 in the two groups includes 18 modulation symbols, and a group 2 in the group includes 17 modulation symbols. For example, an 18th location in the group 2 is filled with 0. Optionally, the quantity of modulation symbols included in each of all the groups may be any one or more of 2, 4, 6, 8, 12, 24, 36, 48, 60, 72, 84, 96, 108, 120, 132, 144, 156, 168, and 180. This is not limited in embodiments of this application. In an example, it is assumed that the plurality of terminal devices include two terminal devices, which are respectively the terminal device 1 and the terminal device 2. The terminal device 1 includes two groups of modulation symbols, which are respectively the group 1 and the group 2. The group 1 and the group 2 include modulation symbols of the terminal device 1. The terminal device 2 includes three groups of modulation symbols, which are respectively a group 3, a group 4, and a group 5. The group 3, the group 4, and the group 5 include modulation symbols of the terminal device 2. In this case, a value N of all the groups is equal to 5, and i represents a quantity of modulation symbols sequentially or randomly selected from each of the five groups at a time. Optionally, sequentially in embodiments of this application may be in ascending order or descending order of indexes of modulation symbols. This is not limited in embodiments of this application.

Optionally, the interleaving information includes k pieces of interleaving sub-information, (k*i*N) is a quantity of modulation symbols of the plurality of terminal devices, and k is a positive integer greater than 0. In other words, the k pieces of interleaving sub-information include the modulation symbols of the plurality of terminal devices, that is, it may be understood that the interleaving information includes all the modulation symbols of the plurality of terminal devices.

In an example, it is assumed that the terminal device 1 has 36 modulation symbols, which are respectively A1, A2, ..., A35, and A36, and the terminal device 2 has 54 modulation symbols, which are respectively B1, B2, ..., B53, and B54. The modulation symbols of the terminal device 1 may be divided into two groups, and a quantity of modulation symbols included in each group is 18. The two groups are respectively a group 1 and a group 2. Modulation symbols included in the group 1 are A1, A2, ..., A17, and A18, and modulation symbols included in the group 2 are A19, A20, ..., A35, and A36. The modulation symbols of the terminal device 2 may be divided into three groups, and a quantity of modulation symbols included in each group is 18. The three groups are respectively a group 3, a group 4, and a group 5. Modulation symbols included in the group 3 are B1, B2, ..., B17, and B18, modulation symbols included in the group 4 are B19, B20, ..., B35, and B36, and modulation symbols included in the group 5 are B37, B38, ..., B53, and B54.

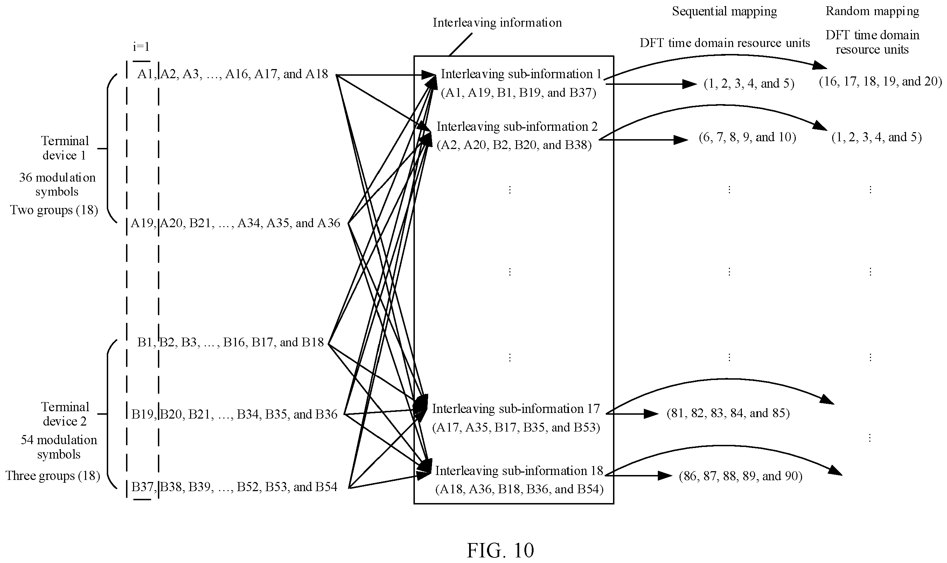

FIG. 10 is a diagram of an interleaving process according to an embodiment of this application. Optionally, a first modulation symbol in each group may be selected as interleaving sub-information 1, and the interleaving sub-information 1 includes A1, A19, B1, B19, and B37. A second modulation symbol in each group may be selected as interleaving sub-information 2, and the interleaving sub-information 2 includes A2, A20, B2, B20, and B38. By analogy, a last modulation symbol in each group may be selected as interleaving sub-information 18, and the interleaving sub-information 18 includes A18, A36, B18, B36, and B54. In this example, the interleaving information includes k=18 pieces of interleaving sub-information; i=1, to be specific, the quantity of modulation symbols sequentially or randomly selected from each of all the groups at a time is 1; a value N of all the groups is equal to 5, to be specific, a sum of quantities of groups of the modulation symbols of all of the plurality of terminal devices is 5; and (k*i*N)=18*1*5=90 is the quantity of modulation symbols of the plurality of terminal devices. Optionally, a mapping location of a modulation symbol in each group is related to the value of all the groups. In this example, because N=5, the mapping location of the modulation symbol in each group is related to 5. For example, the modulation symbol in the group 1 is mapped to a location of a DFT time domain resource unit 1+5(n-1), where n represents a modulation signal index in the group 1; the modulation symbol in the group 2 is mapped to a location of a DFT time domain resource unit 2+5(n-1); and by analogy, details are not enumerated. For example, n=1, a modulation symbol A1 in the group 1 is mapped to a location of a DFT time domain resource unit 1+5(n-1)=1+5(1-1)=0, and a modulation symbol A19 in the group 2 is mapped to a location of a DFT time domain resource unit 2+5(n-1)=2+5(1-1)=2.

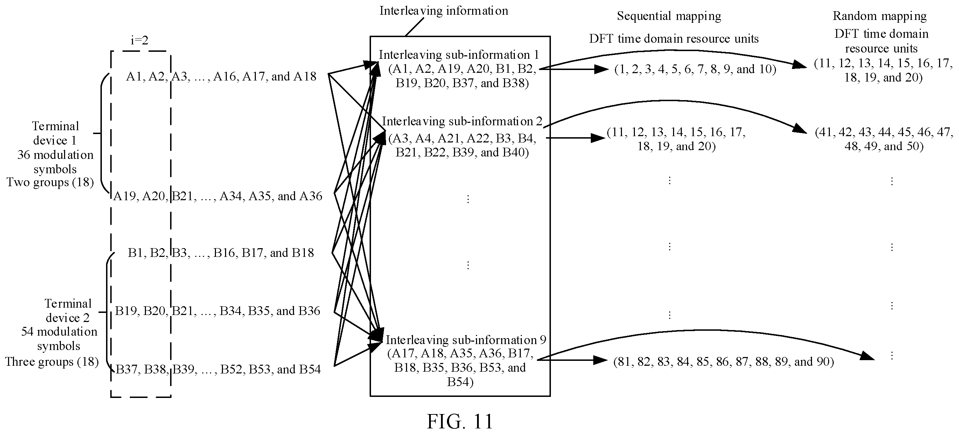

FIG. 11 is a diagram of another interleaving process according to an embodiment of this application. Optionally, a first modulation symbol and a second modulation symbol in each group may be selected as interleaving sub-information 1, and the interleaving sub-information 1 includes A1, A2, A19, A20, B1, B2, B19, B20, B37, and B38. A third modulation symbol and a fourth modulation symbol in each group may be selected as interleaving sub-information 2, and the interleaving sub-information 2 includes A3, A4, A21, A22, B3, B4, B21, B22, B39, and B40. By analogy, a seventeenth modulation symbol and an eighteenth modulation symbol in each group may be selected as interleaving sub-information 9, and the interleaving sub-information 9 includes A17, A18, A35, A36, B17, B18, B35, B36, B53, and B54. In this example, the interleaving information includes k=9 pieces of interleaving sub-information; i=2, to be specific, the quantity of modulation symbols sequentially or randomly selected from each of all the groups at a time is 2; and a value N of all groups is equal to 5, to be specific, a sum of quantities of groups of the modulation symbols of all of the plurality of terminal devices is 5, and (k*i*N) =9*2*5=90 is the quantity of modulation symbols of the plurality of terminal devices.

The foregoing describes a case in which all the groups are interleaved. The following describes a case in which a part of groups are interleaved. Details are as follows.

Each of the at least one piece of interleaving sub-information includes j*M modulation symbols, j is a quantity of modulation symbols sequentially or randomly selected from each of a part of groups of different terminal devices in the plurality of terminal devices at a time, the part of groups include a part of all the groups, all the groups include groups of the modulation symbols of all of the plurality of terminal devices, M indicates the part of groups, and j is a positive integer greater than 0. Optionally, when a value of j is greater than 2, this interleaving manner may be referred to as block interleaving. M is a positive integer greater than 0. The meaning of all groups is the same as that of all groups N, and may be understood as a sum of quantities of groups of the modulation symbols of the different terminal devices, and a quantity of groups of modulation symbols corresponding to each terminal device may be at least one. The part of groups may include groups of modulation symbols corresponding to different terminal devices. Optionally, a quantity of the part of groups may be any one of 1 to 96. This is not limited in embodiments of this application. Optionally, j, the quantity of the part of groups, or a quantity of modulation symbols included in each of the part of groups may be agreed on by the terminal device and the network device, specified in a protocol, configured by the network device, or reported by the terminal device. This is not limited in embodiments of this application. For details, refer to the related descriptions of each of all the groups. Details are not described herein again. In an example, it is assumed that the plurality of terminal devices include two terminal devices, which are respectively the terminal device 1 and the terminal device 2. The terminal device 1 includes two groups of modulation symbols, which are respectively a group 1 and a group 2. The group 1 and the group 2 include modulation symbols of the terminal device 1. The terminal device 2 includes two groups of modulation symbols, which are respectively a group 3 and a group 4. The group 3 and the group 4 include modulation symbols of the terminal device 2. In this case, a value N of all groups is equal to 4, a value M of the part of groups is equal to 2, the part of groups may include the group 1 and the group 3, or the group 2 and the group 4, and j represents a quantity of modulation symbols sequentially or randomly selected from each of the part of groups at a time. For example, j represents a quantity of modulation symbols sequentially selected from the group 1 at a time.

Optionally, the interleaving information includes k pieces of interleaving sub-information, (k*j*M) is a quantity of modulation symbols of the plurality of terminal devices, and k is a positive integer greater than 0. That is, the k pieces of interleaving sub-information include the modulation symbols of the plurality of terminal devices. That is, it may be understood that the interleaving information includes all or all the modulation symbols of the plurality of terminal devices.

In an example, it is assumed that the terminal device 1 has 48 modulation symbols, which are respectively A1, A2, ..., A47, and A48, and the terminal device 2 has 48 modulation symbols, which are respectively B1, B2, ..., B47, and B48. The modulation symbols of the terminal device 1 may be divided into four groups, and a quantity of modulation symbols included in each group is 12. The four groups are respectively a group 1, a group 2, a group 3, and a group 4. Modulation symbols included in the group 1 are A1, A2, ..., A11, and A12, modulation symbols included in the group 2 are A13, A14, ..., A23, and A24, modulation symbols included in the group 3 are A25, A26, ..., A35, and A36, and modulation symbols included in the group 4 are A37, A38, ..., A47, and A48. The modulation symbols of the terminal device 2 may be divided into four groups, and a quantity of modulation symbols included in each group is 12. The four groups are respectively a group 5, a group 6, a group 7, and a group 8. Modulation symbols included in the group 5 are B1, B2, ..., B11, and B12, modulation symbols included in the group 6 are B13, B14, ..., B23, and B24, modulation symbols included in the group 7 are B25, B26, ..., B35, and B36, and modulation symbols included in the group 8 are B37, B38, ..., B47, and B48.

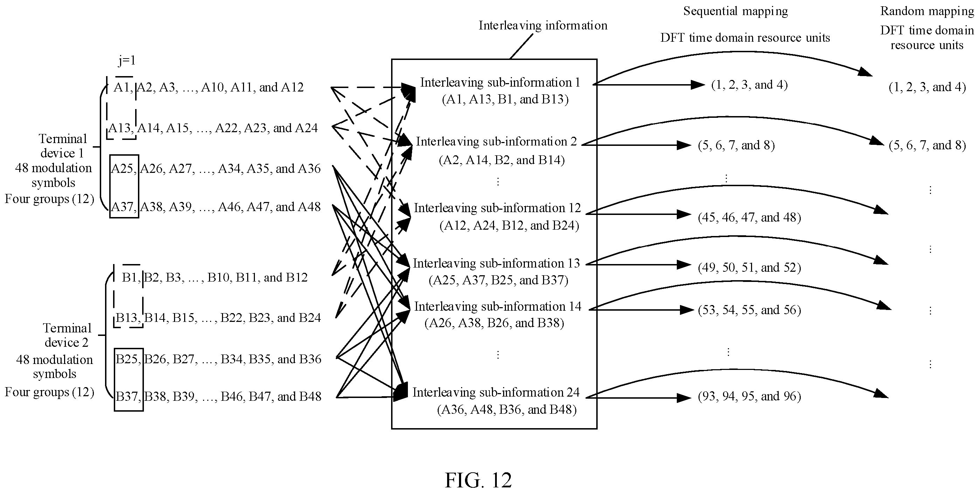

FIG. 12 is a diagram of an interleaving process according to an embodiment of this application. Optionally, the part of groups include the group 1, the group 2, the group 5, and the group 6, or the group 3, the group 4, the group 7, and the group 8. Optionally, the part of groups include the group 1, the group 2, the group 5, and the group 6. A first modulation symbol in each of the part of groups may be selected as interleaving sub-information 1, and the interleaving sub-information 1 includes A1, A13, B1, and B13. A second modulation symbol in each of the part of groups may be selected as interleaving sub-information 2, and the interleaving sub-information 2 includes A2, A14, B2, and B14. By analogy, a twelfth modulation symbol in each of the part of groups may be selected as interleaving sub-information 12, and the interleaving sub-information 12 includes A12, A24, B12, and B24. Optionally, the part of groups include the group 3, the group 4, the group 7, and the group 8. A first modulation symbol in each of the part of groups may be selected as interleaving sub-information 13, and the interleaving sub-information 13 includes A25, A37, B25, and B37. A second modulation symbol in each of the part of groups may be selected as interleaving sub-information 14, and the interleaving sub-information 14 includes A26, A38, B26, and B38. By analogy, a twelfth modulation symbol in each of the part of groups may be selected as interleaving sub-information 24, and the interleaving sub-information 24 includes A36, A48, B36, and B48. Optionally, in this example, the interleaving information includes k=24 pieces of interleaving sub-information; and j=1, to be specific, the quantity of modulation symbols sequentially or randomly selected from each of the part of groups at a time is 1. A value M of the part of groups is equal to 4, and (k*j*M)=24*1 *4=96 is the quantity of modulation symbols of the plurality of terminal devices.

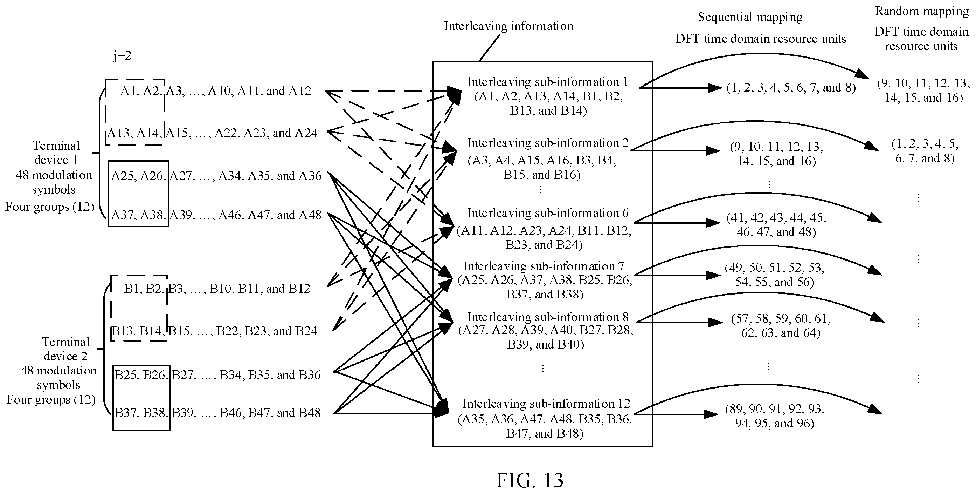

FIG. 13 is a diagram of an interleaving process according to an embodiment of this application. Optionally, the part of groups include the group 1, the group 2, the group 5, and the group 6, or the group 3, the group 4, the group 7, and the group 8. Optionally, the part of groups include the group 1, the group 2, the group 5, and the group 6. A first modulation symbol and a second modulation symbol in each of the part of groups may be selected as interleaving sub-information 1, and the interleaving sub-information 1 includes A1, A2, A13, A14, B1, B2, B13, and B14. A third modulation symbol and a fourth modulation symbol in each of the part of groups may be selected as interleaving sub-information 2, and the interleaving sub-information 2 includes A3, A4, A15, A16, B3, B4, B15, and B16. By analogy, an eleventh modulation symbol and a twelfth modulation symbol in each of the part of groups may be selected as interleaving sub-information 6, and the interleaving sub-information 6 includes A11, A12, A23, A24, B11, B12, B23, and B24. Optionally, the part of groups include the group 3, the group 4, the group 7, and the group 8. A first modulation symbol and a second modulation symbol in each of the part of groups may be selected as interleaving sub-information 7, and the interleaving sub-information 7 includes A25, A26, A37, A38, B25, B26, B37, and B38. A third modulation symbol and a fourth modulation symbol in each of the part of groups may be selected as interleaving sub-information 8, and the interleaving sub-information 8 includes A27, A28, A39, A40, B27, B28, B39, and B40. By analogy, an eleventh modulation symbol and a twelfth modulation symbol in each of the part of groups may be selected as interleaving sub-information 12, and the interleaving sub-information 12 includes A35, A36, A47, A48, B35, B36, B47, and B48. Optionally, in this example, the interleaving information includes k=12 pieces of interleaving sub-information; and j=2, to be specific, the quantity of modulation symbols sequentially or randomly selected from each of the part of groups at a time is 2. A value M of the part of groups is equal to 4, and (k*j*M)=12*2*4=96 is the quantity of modulation symbols of the plurality of terminal devices.

It should be noted that the interleaving of all the groups or the part of groups is merely used as an example. Certainly, there is another interleaving manner. This is not limited in embodiments of this application.

Optionally, each group includes a same or different quantity of modulation symbols, and each group is one of the groups of the modulation symbols of all of the plurality of terminal devices, and may be each of all the groups, or may be each of the part of groups. This is not limited in embodiments of this application. Optionally, each group may also be referred to as a CCE, an REG, a modulation symbol group (modulation symbol group, MSG), or another name. This is not limited in embodiments of this application.

Optionally, the interleaving includes placing the modulation symbols of the different terminal devices in the plurality of terminal devices at a spacing of L modulation symbols, where L is a positive integer greater than 0. It may be understood that two modulation symbols in a same terminal device are placed at the interval of L modulation symbols. Optionally, the two modulation symbols may be adjacent modulation symbols. Optionally, there are L DFT time domain resource units between DFT time domain resource units to which two modulation symbols in a same terminal device are respectively mapped. In an example, the terminal device 1 includes a modulation symbol 1 and a modulation symbol 2, where the modulation symbol 1 and the modulation symbol 2 are adjacent modulation symbols, the modulation symbol 1 is mapped to a DFT time domain resource unit 1, and the modulation symbol 2 is mapped to a DFT time domain resource unit 2. The time domain resource unit 1 and the time domain resource unit 2 are spaced by L time domain resource units, and the L time domain resource units correspond to the L modulation symbols.

Optionally, before interleaving the modulation symbols of the plurality of terminal devices to determine the interleaving information, the method further includes: performing channel coding on downlink control information (downlink control information, DCI) of the plurality of terminal devices, determining bit information of the plurality of terminal devices, and then modulating the bit information of the plurality of terminal devices to determine the modulation symbols of the plurality of terminal devices. Optionally, another operation, for example, scrambling, may be performed on the DCI of the plurality of terminal devices.

Optionally, determining the quantity of modulation symbols of the plurality of terminal devices based on a size of the DFT time domain resource units may also be understood as determining the quantity of modulation symbols of the plurality of terminal devices based on a size of a DFT block. Optionally, the quantity of modulation symbols of the plurality of terminal devices is less than or equal to the size of the DFT block. Optionally, the DFT time domain resource unit may be DFT time domain resource units to which the modulation symbols of the plurality of terminal devices are mapped, or may be understood as the DFT time domain resource unit to which the interleaving information is mapped.

Step S902: Map the interleaving information to discrete Fourier transform DFT time domain resource units to obtain a mapping result.

That the modulation symbols of the different terminal devices in the plurality of terminal devices are mapped to adjacent time domain resource units in the DFT time domain resource units may be understood that DFT time domain resource units to which modulation symbols of a same terminal device are mapped are spaced by a specific quantity of DFT time domain resource units. Optionally, the interleaving information may be sequentially or randomly mapped to the DFT time domain resource units to obtain the mapping result. Certainly, there may be another mapping manner. This is not limited in embodiments of this application. The random mapping process may be performed based on a random function. The random function may be various functions, for example, a hash function. This is not limited in embodiments of this application. Optionally, the interleaving information includes at least one piece of interleaving sub-information, and the modulation symbols of the different terminal devices in the at least one piece of interleaving sub-information are mapped to the adjacent time domain resource units in the DFT time domain resource units. In an example, the interleaving sub-information includes a modulation symbol 1 of the terminal device 1 and a modulation symbol 2 of the terminal device 2, where the modulation symbol 1 of the terminal device 1 is mapped to a DFT time domain resource unit 1, the modulation symbol 2 of the terminal device 2 is mapped to a DFT time domain resource unit 2, and the DFT time domain resource unit 1 and the DFT time domain resource unit 2 are adjacent.

Optionally, the DFT time domain resource units to which the interleaving information is mapped may be referred to as a DFT block, and DFT time domain resource units to which the interleaving sub-information in the interleaving information is mapped may be referred to as a small block in the DFT block. This is not limited in embodiments of this application.

Optionally, subcarrier mapping, IDFT, cyclic prefix addition, and the like may be further performed on the mapping result.

In an example, refer to FIG. 10. The interleaving information includes 18 pieces of interleaving sub-information, and the 18 pieces of interleaving sub-information may be sequentially or randomly mapped to DFT time domain resource units. Details are as follows.

The interleaving information is sequentially mapped to the DFT time domain resource units. For example, A1, A19, B1, B19, and B37 included in interleaving sub-information 1 are respectively mapped to locations of DFT time domain resource units 1, 2, 3, 4, and 5, and A2, A20, B2, B20, and B38 included in interleaving sub-information 2 are respectively mapped to locations of DFT time domain resource units 6, 7, 8, 9, and 10. By analogy, A18, A36, B18, B36, and B54 included in interleaving sub-information 18 are respectively mapped to locations of DFT time domain resource units 86, 87, 88, 89, and 90. Therefore, it can be learned that the modulation symbol A1 in the interleaving sub-information 1 corresponds to the terminal device 1, the modulation symbol A19 in the interleaving sub-information 2 corresponds to the terminal device 2, the modulation symbol A1 in the interleaving sub-information 1 is mapped to the location of the DFT time domain resource unit 1, and the modulation symbol A19 in the interleaving sub-information 2 is mapped to the location of the DFT time domain resource unit 2. The time domain resource unit 1 and the time domain resource unit 2 are adjacent time domain resource units. Optionally, the DFT time domain resource units 1, 2, ..., and 90 may be referred to as a DFT block, and the DFT time domain resource units 1, 2, 3, 4, and 5 may be referred to as a small block in the DFT block. This is not limited in embodiments of this application.

The interleaving information is randomly mapped to the DFT time domain resource units. For example, A1, A19, B1, B19, and B37 included in interleaving sub-information 1 are respectively mapped to locations of DFT time domain resource units 16, 17, 18, 19, and 20, and A2, A20, B2, B20, and B38 included in interleaving sub-information 2 are respectively mapped to locations of DFT time domain resource units 1, 2, 3, 4, and 5. By analogy, the mapping result is obtained.

It should be noted that an action of dividing into the interleaving sub-information may not exist, and the interleaving information may be directly mapped to the DFT time domain resource units. This is not limited in embodiments of this application. For example, the selected modulation symbols A1, A19, B1, B19, and B37 are mapped to locations of DFT time domain resource units 1, 2, 3, 4, and 5.

Optionally, in FIG. 10, there are N1 DFT time-domain resource units, for example, N1=90, and each of all the groups includes N2 modulation symbols, for example, N2=18. In this case, a ratio of the quantity of DFT time-domain resource units to the quantity of modulation symbols included in each of all the groups is N3, for example, N3=N1/N2=90/18=5, where N3 represents a quantity of groups participating in interleaving. Optionally, in this example, the modulation symbol A1 and the modulation symbol A2 included in the terminal device 1 are adjacent modulation symbols. The modulation symbol A1 is mapped to the location of the time-domain resource unit 1, the modulation symbol A2 is mapped to the location of the time-domain resource unit 6, and the time domain resource units to which the modulation symbol A1 and the modulation symbol A2 are mapped are spaced by five time domain resource units. The five time-domain resource units correspond to five modulation symbols.

In an example, the interleaving sub-information in FIG. 11, FIG. 12, and FIG. 13 may be sequentially or randomly mapped to the DFT time domain resource units to obtain the mapping result. For details, refer to mapping of the interleaving sub-information in FIG. 10. Details are not described herein again.

Optionally, Step S901 and Step S902 describe an encoding process of the network device. Compared with the terminal device, the terminal device may obtain to-be-decoded information. The to-be-decoded information includes first information, the first information is information obtained by mapping interleaving information to DFT time domain resource units, and the modulation symbols of the different terminal devices in the plurality of terminal devices are mapped to adjacent time domain resource units in the DFT time domain resource units. Then, the terminal device decodes the to-be-decoded information to obtain a decoding result.

Optionally, the terminal device may obtain a corresponding modulation symbol by selecting a modulation symbol at a corresponding location based on an interleaving mode, for example, all-group interleaving or partial group interleaving, and a start location of mapping.

In the method described in FIG. 9, the interleaving information is determined by interleaving the modulation symbols of the plurality of terminal devices, and the interleaving information is mapped to the DFT time domain resource units. In this way, the modulation symbols of the different terminal devices can be mapped to the adjacent time domain resource units in the DFT time domain resource units, or it may be understood that DFT time domain resource units to which modulation symbols of a same terminal device are mapped are spaced by a specific quantity of DFT time domain resource units. In this way, fluctuation of phase noise can be resisted, impact of signal noise can be reduced, and transmission efficiency can be improved.

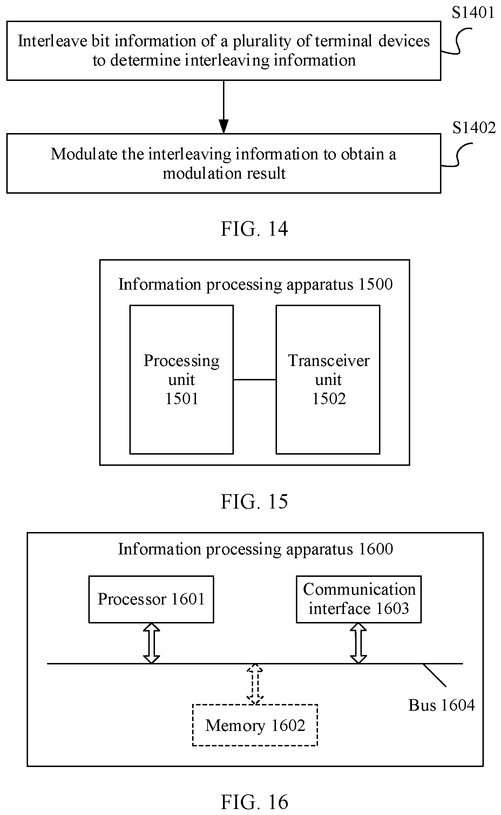

FIG. 14 is an information processing method according to an embodiment of this application. The method includes but is not limited to the following steps.

Step S1401: Interleave bit information of a plurality of terminal devices to determine interleaving information.

Optionally, a network device interleaves the bit information of the plurality of terminal devices to determine the interleaving information. Optionally, the network device may interleave the bit information of the plurality of terminal devices in one or more DFT blocks in one or more OFDM symbols. In other words, it may be understood that the network device interleaves the bit information of the plurality of terminal devices in time domain. Optionally, the bit information of the plurality of terminal devices may mean that different terminal devices in the plurality of terminal devices correspond to different bit information. In an example, a terminal device 1 has 36 pieces of bit information, and a terminal device 2 has 54 pieces of bit information.

Optionally, at least one piece of interleaving sub-information in the interleaving information includes a part of the bit information of the plurality of terminal devices. Optionally, the at least one piece of interleaving sub-information includes a part of bit information of different terminal devices in the plurality of terminal devices. Optionally, the interleaving information may include at least one piece of interleaving sub-information. When the interleaving information includes one piece of interleaving sub-information, the interleaving information, namely, the interleaving sub-information, includes all the bit information of the plurality of terminal devices. When the interleaving information includes a plurality of pieces of interleaving sub-information, each piece of interleaving sub-information includes a part of the bit information of the plurality of terminal devices, and the interleaving information includes all the bit information of the plurality of terminal devices. Optionally, the interleaving sub-information may also be referred to as an interleaving block. This is not limited in embodiments of this application.

The following describes a case of interleaving all groups of the bit information of the plurality of terminal devices, which may also be referred to as interleaving of all bit information groups. Details are as follows: Each of the at least one piece of interleaving sub-information includes $i*N$ pieces of bit information, i is a quantity of bit information sequentially or randomly selected from each of all the groups at a time, all the groups include groups of the bit information of all of the plurality of terminal devices, N indicates all the groups, i is a positive integer greater than 0, and N is a positive integer greater than 0. Optionally, the interleaving information includes k pieces of interleaving sub-information, $(k*i*N)$ is a quantity of bit information of the plurality of terminal devices, and k is a positive integer greater than 0. Optionally, sequentially in embodiments of this application may be in ascending order or descending order of indexes of bit information. This is not limited in embodiments of this application.

Interleaving the part of groups of the bit information of the plurality of terminal devices is specifically as follows: Each of the at least one piece of interleaving sub-information includes $j*M$ pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0. Optionally, the interleaving information includes k pieces of interleaving sub-information, $(k*j*M)$ is a quantity of bit information of the plurality of terminal devices, and k is a positive integer greater than 0.

It should be noted that, for interleaving of all the groups of the bit information or interleaving of the part of groups of the bit information, refer to interleaving of all the groups of the modulation symbols or interleaving of the part of groups of the modulation symbols. Details are not described herein again.

Optionally, each group includes a same or different quantity of bit information, and each group is one of the groups of the bit information of all of the plurality of terminal devices, may be each of all the groups, or may be each of the part of groups. This is not limited in embodiments of this application. Optionally, each group may also be referred to as a CCE, an REG, a bit information group (bit information group, BIG), or another name. This is not limited in embodiments of this application.

Optionally, the interleaving includes placing the bit information of the different terminal devices in the plurality of terminal devices at a spacing of L pieces of bit information, where L is a positive integer greater than 0. For details, refer to the related descriptions of the modulation symbol. Details are not described herein again.

Optionally, before interleaving the bit information of the plurality of terminal devices to determine the interleaving information, the method further includes: performing channel coding on DCI of the plurality of terminal devices to determine the bit information of the plurality of terminal devices. Optionally, another operation, for example, scrambling, may be performed on the DCI of the plurality of terminal devices, but a form of the bit information is still maintained.

Step S1402: Modulate the interleaving information to obtain a modulation result.

Optionally, the network device modulates the interleaving information to obtain the modulation result. Optionally, a modulation symbol in the modulation result is obtained by modulating the bit information of the different terminal devices in the plurality of terminal devices. It may also be understood that one modulation symbol is obtained by modulating a part of the bit information of the different terminal devices. For example, there are two terminal devices, which are respectively a terminal device 1 and a terminal device 2. The modulation symbol may be obtained by modulating a part of bit information of the terminal device 1 and a part of bit information of the terminal device 2. Optionally, one modulation symbol may carry two bits. In an example, the bit information of the terminal device 1 is 0, 1, 0, and 1, and the bit information of the terminal device 2 is 1, 1, 1, and 1. Interleaving information is determined by interleaving the bit information of the terminal device 1 and the bit information of the terminal device 2. The interleaving information includes interleaving sub-information 1 and interleaving sub-information 2. The interleaving sub-information 1 includes 0, 1, 1, and 1, and the interleaving sub-information 2 includes 0, 1, 1, and 1. The interleaving sub-information 1 is modulated to obtain a modulation symbol 1, and the interleaving sub-information 2 is modulated to obtain a modulation symbol 2. The modulation symbol 1 is obtained by modulating a part of the bit information of the terminal device 1 and a part of the bit information of the terminal device 2. The modulation symbol 2 is obtained by modulating a part of the bit information of the terminal device 1 and a part of the bit information of the terminal device 2.

Optionally, the network device may further perform processing such as DFT, subcarrier mapping, IDFT, and cyclic prefix addition on the modulation result.

Optionally, Step S1401 and Step S1402 describe an encoding process of the network device. Compared with the terminal device, the terminal device may obtain to-be-decoded information. The to-be-decoded information includes first information, the first information is information obtained by modulating interleaving information, a modulation symbol in the first information is obtained by modulating the bit information of the different terminal devices in the plurality of terminal devices, the interleaving information is determined by interleaving bit information of the plurality of terminal devices, the bit information is information obtained through control channel coding, and at least one piece of interleaving sub-information in the interleaving information includes a part of the bit information of the plurality of terminal devices.

In the method described in FIG. 14, the interleaving information is determined by interleaving the bit information of the plurality of terminal devices, and the interleaving information is modulated to obtain the modulation result. In this way, a modulation symbol in the modulation result may be obtained by modulating the bit information of the different terminal devices in the plurality of terminal devices, which can resist phase noise fluctuation, reduce impact of signal noise, and improve transmission efficiency compared with a case in which one modulation symbol is obtained by modulating bit information of a same terminal device.

The methods in embodiments of this application are described in detail above, and apparatuses in embodiments of this application are provided below.

FIG. 15 is a diagram of a structure of an information processing apparatus 1500 according to an embodiment of this application. The information processing apparatus 1500 may include a processing unit 1501 and a transceiver unit 1502. The units are specifically as follows.

The processing unit 1501 is configured to perform data processing. The transceiver unit 1502 may be configured to implement a corresponding communication function. The transceiver unit 1502 may also be referred to as a communication interface or a communication module.

Optionally, the information processing apparatus 1500 may further include a storage unit. The storage unit may be configured to store instructions and/or data. The processing module 1202 may read the instructions and/or the data in the storage unit, to implement the foregoing method embodiments.

The information processing apparatus 1500 may be configured to perform the actions performed by the network device in the foregoing method embodiments. The information processing apparatus 1500 may be a network device or a component that can be configured in the network device. The processing unit 1501 is configured to perform the processing-related operations on a network device side in the foregoing method embodiments. The transceiver unit 1502 is configured to perform the communication-related operations on the network device side in the foregoing method embodiments.

Optionally, the transceiver unit 1502 may include a sending unit and a receiving unit. The sending unit is configured to perform a sending operation in the foregoing method embodiments. The receiving unit is configured to perform a receiving operation in the foregoing method embodiments.

It needs to be noted that the information processing apparatus 1500 may include the sending unit, but does not include the receiving unit. Alternatively, the information processing apparatus 1500 may include the receiving unit, but does not include the sending unit. This may be specifically determined depending on whether the foregoing solutions performed by the information processing apparatus 1500 include a sending action and a receiving action.

Optionally, the information processing apparatus 1500 is configured to perform the actions performed by the network device in the embodiments shown in FIG. 9 and FIG. 14. For details, refer to the related descriptions in the embodiments shown in FIG. 9 and FIG. 14. Details are not described herein again. For example, the information processing apparatus 1500 is configured to perform the following solutions.

The processing unit 1501 is configured to interleave modulation symbols of a plurality of terminal devices to determine interleaving information, where the modulation symbol is a modulation symbol of a downlink single carrier, and at least one piece of interleaving sub-information in the interleaving information includes a part of the modulation symbols of the plurality of terminal devices.

The processing unit 1501 is configured to map the interleaving information to discrete Fourier transform DFT time domain resource units to obtain a mapping result, where modulation symbols of different terminal devices in the plurality of terminal devices are mapped to adjacent time domain resource units in the DFT time domain resource units.

In a possible implementation, the processing unit 1501 is configured to interleave the modulation symbols of the plurality of terminal devices in one or more discrete Fourier transform DFT blocks in one or more orthogonal frequency division multiplexing OFDM symbols, to determine the interleaving information.

In another possible implementation, the downlink single carrier includes single carrier quadrature amplitude modulation SC-QAM or discrete Fourier transform-spread-orthogonal frequency division multiplexing DFT-s-OFDM.

In another possible implementation, the modulation symbol includes a modulation symbol of a physical downlink control channel PDCCH or a modulation symbol of a physical downlink shared channel PDSCH.

In another possible implementation, the interleaving includes placing the modulation symbols of the different terminal devices in the plurality of terminal devices at a spacing of L modulation symbols, where L is a positive integer greater than 0.

In another possible implementation, each of the at least one piece of interleaving sub-information includes i*N modulation symbols, i is a quantity of modulation symbols sequentially or randomly selected from each of all groups at a time, all the groups include groups of modulation symbols of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of modulation symbols of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M modulation symbols, j is a quantity of modulation symbols sequentially or randomly selected from each of a part of groups of the different terminal devices in the plurality of terminal devices at a time, the part of groups include a part of all groups, all the groups include groups of the modulation symbols of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of modulation symbols of the plurality of terminal devices, and k is a positive integer greater than 0.

In another possible implementation, M is specified in a protocol, agreed on by the network device and the terminal device, configured by the network device, or reported by the terminal device.

In another possible implementation, the processing unit 1501 is further configured to determine a quantity of modulation symbols of the plurality of terminal devices based on a size of the DFT time domain resource units.

In another possible implementation, each group includes a same quantity of modulation symbols, and each group is one of the groups of the modulation symbols of all of the plurality of terminal devices.

It should be noted that, for implementations and beneficial effects of the units, refer to corresponding descriptions in the method embodiment shown in FIG. 9.

Optionally, the information processing apparatus 1500 is configured to perform the actions performed by the terminal device in the embodiments shown in FIG. 9 and FIG. 14. For details, refer to the related descriptions in the embodiments shown in FIG. 9 and FIG. 14. Details are not described herein again. For example, the information processing apparatus 1500 is configured to perform the following solutions.

The processing unit 1501 is configured to obtain to-be-decoded information. The to-be-decoded information includes first information, the first information is information obtained by mapping interleaving information to DFT time domain resource units, modulation symbols of different terminal devices in a plurality of terminal devices are mapped to adjacent time domain resource units in the DFT time domain resource units, and the interleaving information is determined by interleaving modulation symbols of the plurality of terminal devices. The modulation symbol is a modulation symbol of a downlink single carrier, and at least one piece of interleaving sub-information in the interleaving information includes a part of the modulation symbols of the plurality of terminal devices.

The processing unit 1501 is configured to decode the to-be-decoded information to obtain a decoding result.

In a possible implementation, the interleaving includes selecting the modulation symbols of the different terminal devices in the plurality of terminal devices at a spacing of L modulation symbols, where L is a positive integer greater than 0.

In another possible implementation, each of the at least one piece of interleaving sub-information includes i*N modulation symbols, i is a quantity of modulation symbols sequentially or randomly selected from each of all groups at a time, all the groups include groups of modulation symbols of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of modulation symbols of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M modulation symbols, j is a quantity of modulation symbols sequentially or randomly selected from each of a part of groups of the different terminal devices in the plurality of terminal devices at a time, the part of groups include a part of all groups, all the groups include groups of the modulation symbols of all of the plurality of terminal devices, M indicates the part of groups, j is a positive integer greater than 0, and M is a positive integer greater than 0.

In another possible implementation, the interleaving information includes k pieces of interleaving sub-information, (k*j*M) is a quantity of modulation symbols of the plurality of terminal devices, and k is a positive integer greater than 0.

In another possible implementation, M is specified in a protocol, agreed on by the network device and the terminal device, configured by the network device, or reported by the terminal device.

In another possible implementation, each group includes a same quantity of modulation symbols, and each group is one of the groups of the modulation symbols of all of the plurality of terminal devices.

It should be noted that, for implementations and beneficial effects of the units, refer to corresponding descriptions in the method embodiment shown in FIG. 9.

Optionally, the information processing apparatus 1500 is configured to perform the actions performed by the network device in the embodiments shown in FIG. 9 and FIG. 14. For details, refer to the related descriptions in the embodiments shown in FIG. 9 and FIG. 14. Details are not described herein again. For example, the information processing apparatus 1500 is configured to perform the following solutions.

The processing unit 1501 is configured to interleave bit information of the plurality of terminal devices to determine interleaving information. The bit information is information obtained through control channel coding, and at least one piece of interleaving sub-information in the interleaving information includes a part of the bit information of the plurality of terminal devices.

The processing unit 1501 is configured to modulate the interleaving information to obtain a modulation result. One modulation symbol in the modulation result is obtained by modulating bit information of different terminal devices in the plurality of terminal devices.

In a possible implementation, the processing unit 1501 is configured to interleave the bit information of the plurality of terminal devices in one or more discrete Fourier transform DFT blocks in one or more orthogonal frequency division multiplexing OFDM symbols, to determine the interleaving information.

In another possible implementation, the interleaving includes placing the bit information of the different terminal devices in the plurality of terminal devices at a spacing of L pieces of bit information, where L is a positive integer greater than 0.

In another possible implementation, each of the at least one piece of interleaving sub-information includes i*N pieces of bit information, i is a quantity of bit information sequentially or randomly selected from each of all groups at a time, all the groups include groups of the bit information of all of the plurality of terminal devices, N indicates all the groups, i is a positive integer greater than 0, and N is a positive integer greater than 0.

In another possible implementation, the interleaving information includes k pieces of interleaving sub-information, (k*i*N) is a quantity of bit information of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0.

In another possible implementation, the interleaving information includes k pieces of interleaving subinformation, (k*j*M) is a quantity of bit information of the plurality of terminal devices, and k is a positive integer greater than 0.

In another possible implementation, M is specified in a protocol, agreed on by the network device and the terminal device, configured by the network device, or reported by the terminal device.

In another possible implementation, each group includes a same quantity of bit information, and each group is one of the groups of the bit information of all of the plurality of terminal devices.

It should be noted that, for implementations and beneficial effects of the units, refer to corresponding descriptions in the method embodiment shown in FIG. 14.

Optionally, the information processing apparatus 1500 is configured to perform the actions performed by the terminal device in the embodiments shown in FIG. 9 and FIG. 14. For details, refer to the related descriptions in the embodiments shown in FIG. 9 and FIG. 14. Details are not described herein again. For example, the information processing apparatus 1500 is configured to perform the following solutions.

The processing unit 1501 is configured to obtain to-be-decoded information. The to-be-decoded information includes first information, the first information is information obtained by modulating interleaving information, a modulation symbol in the first information is obtained by modulating the bit information of the different terminal devices in the plurality of terminal devices, the interleaving information is determined by interleaving bit information of the plurality of terminal devices, the bit information is information obtained through control channel coding, and at least one piece of interleaving subinformation in the interleaving information includes a part of the bit information of the plurality of terminal devices.

The processing unit 1501 is configured to decode the to-be-decoded information to obtain a decoding result.

In a possible implementation, the interleaving includes selecting the bit information of the different terminal devices in the plurality of terminal devices at a spacing of L pieces of bit information, where L is a positive integer greater than 0.

In another possible implementation, each of the at least one piece of interleaving sub-information includes i*N pieces of bit information, i is a quantity of bit information sequentially or randomly selected from each of all groups at a time, all the groups include groups of the bit information of all of the plurality of terminal devices, N indicates all the groups, i is a positive integer greater than 0, and N is a positive integer greater than 0.

In another possible implementation, the interleaving information includes k pieces of interleaving subinformation, (k*i*N) is a quantity of bit information of the plurality of terminal devices, and k is a positive integer greater than 0.

In another possible implementation, N is specified in a protocol, agreed on by the network device and the terminal device, configured by the network device, or reported by the terminal device.

In another possible implementation, each of the at least one piece of interleaving sub-information includes j*M pieces of bit information, j is a quantity of bit information sequentially or randomly selected from each of a part of groups of the different terminal devices in the plurality of terminal devices at a time, the part of groups include a part of all groups, all the groups include groups of the bit information of all of the plurality of terminal devices, M indicates the part of groups, j is a positive integer greater than 0, and M is a positive integer greater than 0.

In another possible implementation, the interleaving information includes k pieces of interleaving subinformation, (k*j*M) is a quantity of bit information of the plurality of terminal devices, and k is a positive integer greater than 0.

In another possible implementation, M is specified in a protocol, agreed on by the network device and the terminal device, configured by the network device, or reported by the terminal device.

In another possible implementation, each group includes a same quantity of bit information, and each group is one of the groups of the bit information of all of the plurality of terminal devices.

It should be noted that, for implementations and beneficial effects of the units, refer to corresponding descriptions in the method embodiment shown in FIG. 14.

It should be understood that a specific process in which the units perform the foregoing corresponding processes has been described in detail in the foregoing method embodiment. For brevity, details are not described herein again.

The processing unit 1501 in the foregoing embodiment may be implemented by at least one processor or processor-related circuit. The transceiver unit 1502 may be implemented by a transceiver or a transceiver-related circuit. The transceiver unit 1502 may also be referred to as a communication module or a communication interface. The storage unit may be implemented by at least one memory.

FIG. 16 is a diagram of a structure of another information processing apparatus 1600 according to an embodiment of this application. The information processing apparatus 1600 includes at least one processor 1601 and a communication interface 1603. Optionally, the information processing apparatus 1600 further includes a memory 1602. The processor 1601, the memory 1602, and the communication interface 1603 are connected to each other through a bus 1604. Optionally, the memory 1602 may alternatively be integrated with the processor 1601.

The memory 1602 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1602 is configured to store a related computer program and data. The communication interface 1603 is configured to: receive and send data.

The processor 1601 may be one or more central processing units (central processing unit, CPU). When the processor 1601 is a CPU, the CPU may be a single-core CPU or a multicore CPU.

The processor 1601 in the information processing apparatus 1600 is configured to read the computer program or instructions stored in the memory 1602, to implement a function of the processing unit. The communication interface 1603 in the information processing apparatus 1600 is configured to implement a function of the transceiver unit.

An embodiment of this application provides a chip system. The chip system includes at least one processor and a communication interface. The at least one processor is configured to execute a computer program or instructions, to implement the methods in FIG. 9 and FIG. 14.

An embodiment of this application provides a computer-readable storage medium. The computer-readable storage medium stores a computer program or instructions, and when the computer program or the instructions are run on a processor, the methods in FIG. 9 and FIG. 14 are implemented.

An embodiment of this application provides a computer program product. The computer program product includes a computer program or instructions, and when the computer program or the instructions are run on a computer, the methods provided in the embodiments shown in FIG. 9 and FIG. 14 are implemented.

An embodiment of this application provides a communication system. The communication system includes the network device in the foregoing embodiments and the terminal device in the foregoing embodiments. The network device is configured to perform a part of or all the operations performed by the network device in the foregoing method embodiments, and the terminal device is configured to perform a part of or all the operations performed by the terminal device in the foregoing method embodiments.

An embodiment of this application further provides a chip apparatus, including a processor, configured to invoke a computer program or instructions stored in a memory, so that the processor performs the methods provided in the embodiments shown in FIG. 9 and FIG. 14.

In a possible implementation, an input of the chip apparatus corresponds to a receiving operation in any one of the embodiments shown in FIG. 9 and FIG. 14, and an output of the chip apparatus corresponds to a sending operation in any one of the embodiments shown in FIG. 9 and FIG. 14.

Optionally, the processor is coupled to the storage through an interface.

Optionally, the chip apparatus further includes the storage, and the storage stores the computer degree or the computer instructions.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner or may be implemented in a manner of executing a software instruction by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In descriptions of this application, terms such as "first", "second", "S901", or "S902" are merely used for distinguishing descriptions and for ease of organizing this specification. Different sequence numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns means "a singular noun or a plural noun", that is, "one or more". "At least one" means one or more. "Including at least one of the following: A, B, and C" means that A may be included, B may be included, C may be included, A and B may be included, A and C may be included, B and C may be included, or A, B, and C may be included, where A, B, and C may be singular or plural.

## Claims

1. An information processing method, comprising:

   interleaving modulation symbols of a plurality of terminal devices to determine interleaving information, wherein the modulation symbol is a modulation symbol of a downlink single carrier, and at least one piece of interleaving sub-information in the interleaving information comprises a part of the modulation symbols of the plurality of terminal devices; and
   mapping the interleaving information to discrete Fourier transform DFT time domain resource units to obtain a mapping result, wherein modulation symbols of different terminal devices in the plurality of terminal devices are mapped to adjacent time domain resource units in the DFT time domain resource units.

2. The method according to claim 1, wherein the downlink single carrier comprises single carrier quadrature amplitude modulation SC-QAM or discrete Fourier transform spread orthogonal frequency division multiplexing DFT-s-OFDM.

3. The method according to claim 1 or 2, wherein the modulation symbol comprises a modulation symbol of a physical downlink control channel PDCCH or a modulation symbol of a physical downlink shared channel PDSCH.

4. The method according to any one of claims 1 to 3, wherein
   the interleaving comprises placing the modulation symbols of the different terminal devices in the plurality of terminal devices at a spacing of L modulation symbols, wherein L is a positive integer greater than 0.

5. The method according to any one of claims 1 to 4, wherein
   each of the at least one piece of interleaving sub-information comprises i*N modulation symbols, i is a quantity of modulation symbols sequentially or randomly selected from each of all groups at a time, all the groups comprise groups of the modulation symbols of all of the plurality of terminal devices, N indicates all the groups, i is a positive integer greater than 0, and N is a positive integer greater than 0.

6. The method according to claim 5, wherein
   the interleaving information comprises k pieces of interleaving sub-information, (k*i*N) is a quantity of modulation symbols of the plurality of terminal devices, and k is a positive integer greater than 0.

7.  The method according to any one of claims 1 to 4, wherein
    each of the at least one piece of interleaving sub-information comprises j*M modulation symbols, j is a quantity of modulation symbols sequentially or randomly selected from each of a part of groups of the different terminal devices in the plurality of terminal devices at a time, the part of groups comprise a part of all groups, all the groups comprise groups of the modulation symbols of all of the plurality of terminal devices, M indicates the part of groups, j is a positive integer greater than 0, and M is a positive integer greater than 0.

8.  The method according to claim 7, wherein
    the interleaving information comprises k pieces of interleaving sub-information, (k*j*M) is a quantity of modulation symbols of the plurality of terminal devices, and k is a positive integer greater than 0.

9.  The method according to any one of claims 1 to 8, wherein the method further comprises:
    determining the quantity of modulation symbols of the plurality of terminal devices based on a size of the DFT time domain resource units.

10. The method according to any one of claims 5 to 9, wherein each group comprises a same quantity of modulation symbols, and each group is one of the groups of the modulation symbols of all of the plurality of terminal devices.

11. An information processing method, comprising:

    obtaining to-be-decoded information, wherein the to-be-decoded information comprises first information, the first information is information obtained by mapping interleaving information to DFT time domain resource units, modulation symbols of different terminal devices in a plurality of terminal devices are mapped to adjacent time domain resource units in the DFT time domain resource units, the interleaving information is determined by interleaving modulation symbols of the plurality of terminal devices, the modulation symbol is a modulation symbol of a downlink single carrier, and at least one piece of interleaving sub-information in the interleaving information comprises a part of the modulation symbols of the plurality of terminal devices; and
    decoding the to-be-decoded information to obtain a decoding result.

12. The method according to claim 11, wherein the interleaving comprises selecting the modulation symbols of the different terminal devices in the plurality of terminal devices at a spacing of L modulation symbols, wherein L is a positive integer greater than 0.

13. The method according to claim 11 or 12, wherein each of the at least one piece of interleaving sub-information comprises i*N modulation symbols, i is a quantity of modulation symbols sequentially or randomly selected from each of all groups at a time, all the groups comprise groups of the modulation symbols of all of the plurality of terminal devices, N indicates all the groups, i is a positive integer greater than 0, and N is a positive integer greater than 0.

14. The method according to claim 13, wherein the interleaving information comprises k pieces of interleaving sub-information, (k*i*N) is a quantity of modulation symbols of the plurality of terminal devices, and k is a positive integer greater than 0.

15. The method according to claim 11 or 12, wherein each of the at least one piece of interleaving sub-information comprises j*M modulation symbols, j is a quantity of modulation symbols sequentially or randomly selected from each of a part of groups of the different terminal devices in the plurality of terminal devices at a time, the part of groups comprise a part of all groups, all the groups comprise groups of the modulation symbols of all of the plurality of terminal devices, M indicates the part of groups, j is a positive integer greater than 0, and M is a positive integer greater than 0.

16. The method according to claim 15, wherein the interleaving information comprises k pieces of interleaving sub-information, (k*j*M) is a quantity of modulation symbols of the plurality of terminal devices, and k is a positive integer greater than 0.

17. The method according to any one of claims 13 to 16, comprising:
    each group comprises a same quantity of modulation symbols, and each group is one of the groups of the modulation symbols of all of the plurality of terminal devices.

18. An information processing method, comprising:

    interleaving bit information of the plurality of terminal devices to determine interleaving information, wherein the bit information is information obtained through control channel coding, and at least one piece of interleaving sub-information in the interleaving information comprises a part of the bit information of the plurality of terminal devices; and

modulating the interleaving information to obtain a modulation result, wherein a modulation symbol in the modulation result is obtained by modulating bit information of different terminal devices in the plurality of terminal devices.

19. The method according to claim 18, wherein the interleaving comprises placing the bit information of the different terminal devices in the plurality of terminal devices at a spacing of L pieces of bit information, wherein L is a positive integer greater than 0.

20. The method according to claim 18 or 19, wherein each of the at least one piece of interleaving sub-information comprises i*N pieces of bit information, i is a quantity of bit information sequentially or randomly selected from each of all groups at a time, all the groups comprise groups of the bit information of all of the plurality of terminal devices, N indicates all the groups, i is a positive integer greater than 0, and N is a positive integer greater than 0.

21. The method according to claim 20, wherein the interleaving information comprises k pieces of interleaving sub-information, (k*i*N) is a quantity of bit information of the plurality of terminal devices, and k is a positive integer greater than 0.

22. The method according to claim 18 or 19, wherein each of the at least one piece of interleaving sub-information comprises j*M pieces of bit information, j is a quantity of bit information sequentially or randomly selected from each of a part of groups of the different terminal devices in the plurality of terminal devices at a time, the part of groups comprise a part of all groups, all the groups comprise groups of the bit information of all of the plurality of terminal devices, M indicates the part of groups, j is a positive integer greater than 0, and M is a positive integer greater than 0.

23. The method according to claim 22, wherein the interleaving information comprises k pieces of interleaving sub-information, (k*j*M) is a quantity of bit information of the plurality of terminal devices, and k is a positive integer greater than 0.

24. The method according to any one of claims 20 to 23, wherein each group comprises a same quantity of bit information, and each group is one of the groups of the bit information of all of the plurality of terminal devices.

25. An information processing method, comprising:

obtaining to-be-decoded information, wherein the to-be-decoded information comprises first information, the first information is information obtained by modulating interleaving information, a modulation symbol in the first information is obtained by modulating bit information of different terminal devices in the plurality of terminal devices, the interleaving information is determined by interleaving bit information of the plurality of terminal devices, the bit information is information obtained through control channel coding, and at least one piece of interleaving sub-information in the interleaving information comprises a part of the bit information of the plurality of terminal devices; and

decoding the to-be-decoded information to obtain a decoding result.

26. The method according to claim 25, wherein the interleaving comprises selecting the bit information of the different terminal devices in the plurality of terminal devices at a spacing of L pieces of bit information, wherein L is a positive integer greater than 0.

27. The method according to claim 25 or 26, wherein each of the at least one piece of interleaving sub-information comprises i*N pieces of bit information, i is a quantity of bit information sequentially or randomly selected from each of all groups at a time, all the groups comprise groups of the bit information of all of the plurality of terminal devices, N indicates all the groups, i is a positive integer greater than 0, and N is a positive integer greater than 0.

28. The method according to claim 27, wherein the interleaving information comprises k pieces of interleaving sub-information, (k*i*N) is a quantity of bit information of the plurality of terminal devices, and k is a positive integer greater than 0.

29. The method according to claim 25 or 26, wherein each of the at least one piece of interleaving sub-information comprises j*M pieces of bit information, j is a quantity of bit information sequentially or randomly selected from each of a part of groups of the different terminal devices in the plurality of terminal devices at a time, the part of groups comprise a part of all groups, all the groups comprise groups of the bit information of all of the plurality of terminal devices, M indicates the part of groups, j is a positive integer greater than 0, and M is a positive integer greater than 0.

30. The method according to claim 29, wherein the interleaving information comprises k pieces of interleaving sub-information, (k*j*M) is a quantity of bit information of the plurality of terminal devices, and k is a positive integer greater than 0.

**31.** The method according to any one of claims 27 to 30, comprising:
each group comprises a same quantity of bit information, and each group is one of the groups of the bit information of all of the plurality of terminal devices.

**32.** An information processing apparatus, wherein the apparatus comprises a transceiver unit and a processing unit, the processing unit is configured to perform a processing operation in the method according to any one of claims 1 to 10, and the transceiver unit is configured to perform receiving and sending operations in the method according to any one of claims 1 to 10.

**33.** An information processing apparatus, wherein the apparatus comprises a transceiver unit and a processing unit, the processing unit is configured to perform a processing operation in the method according to any one of claims 11 to 17, and the transceiver unit is configured to perform receiving and sending operations in the method according to any one of claims 11 to 17.

**34.** An information processing apparatus, wherein the apparatus comprises a transceiver unit and a processing unit, the processing unit is configured to perform a processing operation in the method according to any one of claims 18 to 24, and the transceiver unit is configured to perform receiving and sending operations in the method according to any one of claims 18 to 24.

**35.** An information processing apparatus, wherein the apparatus comprises a transceiver unit and a processing unit, the processing unit is configured to perform a processing operation in the method according to any one of claims 25 to 31, and the transceiver unit is configured to perform receiving and sending operations in the method according to any one of claims 25 to 31.

**36.** An information processing system, wherein the system comprises the apparatus according to claim 32 and the apparatus according to claim 33, or the apparatus according to claim 34 and the apparatus according to claim 35.

**37.** A computer-readable storage medium, wherein the computer-readable storage medium stores a computer program or instructions, and when the computer program or instructions are run on a processor, the method according to any one of claims 1 to 31 is performed.

**38.** A computer program product, wherein the computer program product comprises a computer program or instructions, and when the computer program or instructions are run on a computer, the method according to any one of claims 1 to 31 is performed.

Communication system 100

FIG. 1

FIG. 2

FIG. 3

```
┌──────────────┐   ┌──────────┐   ┌──────────┐   ┌──────────┐   ┌──────────┐   ┌──────────┐   ┌──────────┐
│ Serial-to-   │   │ Discrete │   │          │   │ Inverse  │   │Parallel-to-│ │ Cyclic   │   │Digital-to-│
│ parallel     │──▶│ Fourier  │──▶│Subcarrier│──▶│ discrete │──▶│ serial   │──▶│prefix CP │──▶│ analog   │
│ conversion   │   │ transform│   │ mapping  │   │ Fourier  │   │conversion│   │addition/ │   │converter │
│ (S-to-P)     │   │ DFT      │   │          │   │ transform│   │ (P-to-S) │   │ Power    │   │ DAC      │
│              │   │          │   │          │   │ IDFT     │   │          │   │ switching│   │          │
│              │   │          │   │          │   │          │   │          │   │ PS       │   │          │
└──────────────┘   └──────────┘   └──────────┘   └──────────┘   └──────────┘   └──────────┘   └──────────┘
```

Channel

```
┌──────────────┐   ┌──────────┐   ┌──────────┐   ┌──────────┐   ┌──────────┐   ┌──────────┐   ┌──────────┐
│ Parallel-    │   │ Inverse  │   │          │   │ Discrete │   │ Serial-to-│  │ Cyclic   │   │ Analog-  │
│ to-serial    │◀──│ discrete │◀──│Subcarrier│◀──│ Fourier  │◀──│ parallel │◀──│prefix CP │◀──│to-digital│
│ conversion   │   │ Fourier  │   │ mapping/ │   │ transform│   │conversion│   │ removal  │   │converter │
│ (P-to-S)     │   │ transform│   │Normalization│ │ DFT      │   │ (S-to-P) │   │          │   │ ADC      │
│              │   │ IDFT     │   │          │   │          │   │          │   │          │   │          │
└──────────────┘   └──────────┘   └──────────┘   └──────────┘   └──────────┘   └──────────┘   └──────────┘
```

FIG. 4

FIG. 5

FIG. 6A

FIG. 6B

Frequency
domain

Time
domain

One-symbol
CORESET

REG bundle size=6

REG bundle size=2

Frequency
domain

Time
domain

Two-symbol
CORESET

REG bundle size=6

REG bundle size=2

Frequency
domain

Time
domain

Three-symbol
CORESET

REG bundle size=6

REG bundle size=3

REG

FIG. 7

EP 4 753 179 A1

Frequency domain

Time domain

REG bundle 0    REG bundle 8    REG bundle 16

CORESET

| OFDM symbol 0 | 0 | 2 | 4 | 6 | 8 | 10 | 12 | 14 | 16 | 18 | 20 | 22 | 24 | 26 | 28 | 30 | 32 | 34 | 36 | 38 | 40 | 42 | 44 | 46 |
| OFDM symbol 1 | 1 | 3 | 5 | 7 | 9 | 11 | 13 | 15 | 17 | 19 | 21 | 23 | 25 | 27 | 29 | 31 | 33 | 35 | 37 | 39 | 41 | 43 | 45 | 47 |

FIG. 8

S901

Interleave modulation symbols of a plurality of terminal devices to determine interleaving information

Map the interleaving information to a discrete Fourier transform DFT time domain resource unit to obtain a mapping result

S902

FIG. 9

FIG. 10

EP 4 753 179 A1

Interleaving information

Sequential mapping

Random mapping

i=2

DFT time domain resource units

DFT time domain resource units

A1, A2, A3, ..., A16, A17, and A18

Interleaving sub-information 1
(A1, A2, A19, A20, B1, B2, B19, B20, B37, and B38)

(1, 2, 3, 4, 5, 6, 7, 8, 9, and 10)

(11, 12, 13, 14, 15, 16, 17, 18, 19, and 20)

Terminal device 1
36 modulation symbols
Two groups (18)

Interleaving sub-information 2
(A3, A4, A21, A22, B3, B4, B21, B22, B39, and B40)

(11, 12, 13, 14, 15, 16, 17, 18, 19, and 20)

(41, 42, 43, 44, 45, 46, 47, 48, 49, and 50)

A19, A20, B21, ..., A34, A35, and A36

B1, B2, B3, ..., B16, B17, and B18

Terminal device 2
54 modulation symbols
Three groups (18)

B19, B20, B21, ..., B34, B35, and B36

B37, B38, B39, ..., B52, B53, and B54

Interleaving sub-information 9
(A17, A18, A35, A36, B17, B18, B35, B36, B53, and B54)

(81, 82, 83, 84, 85, 86, 87, 88, 89, and 90)

FIG. 11

FIG. 12

EP 4 753 179 A1

FIG. 13

EP 4 753 179 A1

S1401

Interleave bit information of a plurality of terminal devices to determine interleaving information

S1402

Modulate the interleaving information to obtain a modulation result

FIG. 14

Information processing apparatus 1500

Processing unit 1501

Transceiver unit 1502

FIG. 15

Information processing apparatus 1600

Processor 1601

Communication interface 1603

Bus 1604

Memory 1602

FIG. 16

## INTERNATIONAL SEARCH REPORT

| International application No. |
|---|
| **PCT/CN2023/121588** |

| A. | CLASSIFICATION OF SUBJECT MATTER |
|---|---|

H04L1/00(2006.01)i; H04W72/044(2023.01)i

According to International Patent Classification (IPC) or to both national classification and IPC

| B. | FIELDS SEARCHED |
|---|---|

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNABS, CNTXT, ENTXT, ENTXTC, VEN, CNKI: 比特, 不同, 部分, 调制, 多, 终端, 符号, 间隔, 交织, 设备, 时频资源, 相邻, 信息, 映射, 噪声, 干扰, 减少, noise, interfer+, decrea+, bit, DFT, frequency, resource, time, part+, symbol+, select+, modu+, determin+, interleav+, interva+, map+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116671208 A (HUAWEI TECHNOLOGIES CO., LTD.) 29 August 2023 (2023-08-29)<br>entire document | 1-38 |
| A | CN 116528367 A (VIVO COMMUNICATION TECHNOLOGY CO., LTD.) 01 August 2023 (2023-08-01)<br>entire document | 1-38 |
| A | WO 2022141326 A1 (HUAWEI TECHNOLOGIES CO., LTD.) 07 July 2022 (2022-07-07)<br>entire document | 1-38 |
| A | CN 109525359 A (HUAWEI TECHNOLOGIES CO., LTD.) 26 March 2019 (2019-03-26)<br>entire document | 1-38 |
| A | JP 2007088995 A (NIPPON TELEGRAPH & TELEPHONE CORP.) 05 April 2007 (2007-04-05)<br>entire document | 1-38 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2024** | **16 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/121588** |

| Patent document cited in search report | | | Publication date (day/month/year) | Patent family member(s) | | | Publication date (day/month/year) |
| --- | --- | --- | --- | --- | --- | --- | --- |
| CN | 116671208 | A | 29 August 2023 | None | | | |
| CN | 116528367 | A | 01 August 2023 | None | | | |
| WO | 2022141326 | A1 | 07 July 2022 | None | | | |
| CN | 109525359 | A | 26 March 2019 | US | 2020220752 | A1 | 09 July 2020 |
| | | | | US | 11251997 | B2 | 15 February 2022 |
| | | | | EP | 3664550 | A1 | 10 June 2020 |
| | | | | EP | 3664550 | A4 | 09 September 2020 |
| | | | | EP | 3664550 | B1 | 24 August 2022 |
| | | | | WO | 2019052388 | A1 | 21 March 2019 |
| JP | 2007088995 | A | 05 April 2007 | None | | | |

Form PCT/ISA/210 (patent family annex) (July 2022)